# EUROPEAN PATENT APPLICATION

(11) **EP 4 723 770 A1**
(43) Date of publication of application: **08.04.2026**
(21) Application number: 23938991.9
(22) Date of filing: 02.06.2023
(51) Int. Cl.: H04W 72/04

(54) **COMMUNICATION METHOD, AND DEVICE**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN); GUO, Boren, Dongguan, Guangdong 523860 (CN)
(74) Representative: Taor, Simon Edward William
(86) International application number: PCT/CN2023/098088
(87) International publication number: WO 2024/244007

(57) **Abstract**

The present disclosure relates to a communication method, a device, a computer-readable storage medium, a computer program product, and a computer program. The method includes the following. A terminal device sends a first identifier. The first identifier indicates information related to the terminal device. The information related to the terminal device includes at least one of: information of a user using the terminal device, information of an application running on the terminal device, or information of a service running on the terminal device. The first identifier is used for determining configuration information associated with the first identifier.

## Description

### TECHNICAL FIELD

This disclosure relates to the field of communication, in particular to a communication method, a device, a computer-readable storage medium, a computer program product, and a computer program.

### BACKGROUND

In related art, configuration information, such as subscription information, a user equipment (UE) policy, generated context information, etc., is implemented based on a UE identity (ID) of a terminal device. However, how to more flexibly and accurately adjust or determine configuration information of a finer granularity (or a finer dimension) for the terminal device becomes a problem to be solved.

### SUMMARY

Embodiments of the present disclosure provide a communication method, a device, a computer-readable storage medium, a computer program product, and a computer program.

Embodiments of the present disclosure provide a communication method. The method includes the following. A terminal device sends a first identifier. The first identifier indicates information related to the terminal device. The information related to the terminal device includes at least one of: information of a user using the terminal device, information of an application running on the terminal device, or information of a service running on the terminal device. The first identifier is used for determining configuration information associated with the first identifier.

Embodiments of the present disclosure provide a communication method. The method includes the following. A first network device receives a first identifier. The first identifier indicates information related to a terminal device. The information related to the terminal device includes at least one of: information of a user using the terminal device, information of an application running on the terminal device, or information of a service running on the terminal device. The first identifier is used for determining configuration information associated with the first identifier.

Embodiments of the present disclosure provide a terminal device. The terminal device includes a first communication unit. The first communication unit is configured to send a first identifier. The first identifier indicates information related to the terminal device. The information related to the terminal device includes at least one of: information of a user using the terminal device, information of an application running on the terminal device, or information of a service running on the terminal device. The first identifier is used for determining configuration information associated with the first identifier.

Embodiments of the present disclosure provide a first network device. The first network device includes a second communication unit. The second communication unit is configured to receive a first identifier. The first identifier indicates information related to a terminal device. The information related to the terminal device includes at least one of: information of a user using the terminal device, information of an application running on the terminal device, or information of a service running on the terminal device. The first identifier is used for determining configuration information associated with the first identifier.

Embodiments of the present disclosure provide a terminal device. The terminal device includes a processor and a memory. The memory is configured to store a computer program. The processor is configured to invoke and execute the computer program stored in the memory, to cause the terminal device to perform the method mentioned above.

Embodiments of the present disclosure provide a first network device. The first network device includes a processor and a memory. The memory is configured to store a computer program. The processor is configured to invoke and execute the computer program stored in the memory, to cause the first network device to perform the method mentioned above.

Embodiments of the present disclosure provide a chip. The chip is configured to implement the method mentioned above.

Specifically, the chip includes a processor. The processor is configured to invoke and execute a computer program stored in a memory, to cause a device equipped with the chip to perform the method mentioned above.

Embodiments of the present disclosure provide a computer-readable storage medium. The computer-readable storage medium is configured to store a computer program which, when executed by a device, causes the device to perform the method mentioned above.

Embodiments of the present disclosure provide a computer program product. The computer program product includes computer program instructions that can cause a computer to perform the method mentioned above.

Embodiments of the present disclosure provide a computer program. The computer program, when executed by a computer, causes the computer to perform the method mentioned above.

With the solutions provided in embodiments of the present disclosure, the terminal device can send the first identifier, where the first identifier indicates the information related to the terminal device, and the information related to the terminal device includes at least one of: the information of the user using the terminal device, the information of the application and/or the service running on the terminal device, etc. As such, the configuration information associated with the first identifier can be obtained based on the first identifier. In this way, a network side is enabled to determine configuration information associated with the terminal device based on user and/or service and/or application-related information of the terminal device, which can avoid a problem in the related art that corresponding configuration information cannot be adjusted or determined flexibly and accurately in combination with finer granularity (or dimension), such as different users and/or different applications and/or different services.

### BRIEF DESCRIPTION OF THE DRAWINGS

FIG. 1 is a schematic diagram of an application scenario according to embodiments of the present disclosure.
FIG. 2 is a schematic diagram illustrating a 5th generation core (5GC)-based system.
FIG. 3 is a schematic diagram illustrating a quality of service (QoS) mechanism in a network architecture of a related protocol.
FIG. 4 is a schematic diagram of a scenario in which different users of a same user equipment (UE) correspond to different network configurations.
FIG. 5 is a schematic flowchart of a communication method according to an embodiment of the present disclosure.
FIG. 6 is a schematic flowchart of a communication method according to another embodiment of the present disclosure.
FIG. 7 to FIG. 10 are multiple exemplary flowcharts each illustrating a processing flow of a communication method according to embodiments of the present disclosure.
FIG. 11 is a schematic block diagram of a terminal device according to an embodiment of the present disclosure.
FIG. 12 is a schematic block diagram of a first network device according to an embodiment of the present disclosure.
FIG. 13 is a schematic block diagram of a communication device according to embodiments of the present disclosure.
FIG. 14 is a schematic block diagram of a chip according to embodiments of the present disclosure.
FIG. 15 is a schematic block diagram of a communication system according to embodiments of the present disclosure.

### DETAILED DESCRIPTION

The following will describe technical solutions of embodiments of the present disclosure with reference to accompanying drawings in embodiments of the present disclosure.

The technical solutions of embodiments of the present disclosure are applicable to various communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5th-generation (5G) communication system, or other communication systems, etc.

Generally speaking, a conventional communication system generally supports a limited number (quantity) of connections and thus is easy to implement. However, with the development of communication technology, a mobile communication system will not only support conventional communication but also support, for example, device-to-device (D2D) communication, machine-to-machine (M2M) communication, machine-type communication (MTC), vehicle-to-vehicle (V2V) communication, or vehicle-to-everything (V2X) communication, etc. Embodiments of the present disclosure can also be applied to these communication systems. In a possible embodiment, the communication system in embodiments of the present disclosure may be applied to a carrier aggregation (CA) scenario, or may be applied to a dual connectivity (DC) scenario, or may be applied to a standalone (SA) scenario. In a possible embodiment, the communication system in embodiments of the present disclosure is applicable to an unlicensed spectrum, and the unlicensed spectrum may be regarded as a shared spectrum. Alternatively, the communication system in embodiments of the present disclosure is applicable to a licensed spectrum, and the licensed spectrum may be regarded as a non-shared spectrum.

Various embodiments of the present disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, a user device, etc. The terminal device may be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, a terminal device in a future evolved public land mobile network (PLMN), etc. In embodiments of the present disclosure, the terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.). In embodiments of the present disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, a wireless terminal device in smart home, etc. By way of explanation rather than limitation, in embodiments of the present disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the present disclosure, the network device may be a device configured to communicate with a mobile device, and the network device may be an access point (AP) in a WLAN, a base transceiver station (BTS) in GSM or CDMA, or may be a Node B (NB) in WCDMA, or may be an evolutional Node B (eNB or eNodeB) in LTE, or a relay station or AP, or an in-vehicle device, a wearable device, a network device (gNB) in an NR network, a network device in a future evolved PLMN, or a network device in an NTN, etc. By way of explanation rather than limitation, in embodiments of the present disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water. In embodiments of the present disclosure, the network device serves a cell, and the terminal device communicates with the network device on a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell may include: a metro cell, a micro cell, a pico cell, a femto cell, etc. These small cells are characterized by small coverage and low transmission power and are adapted to provide data transmission service with high-rate.

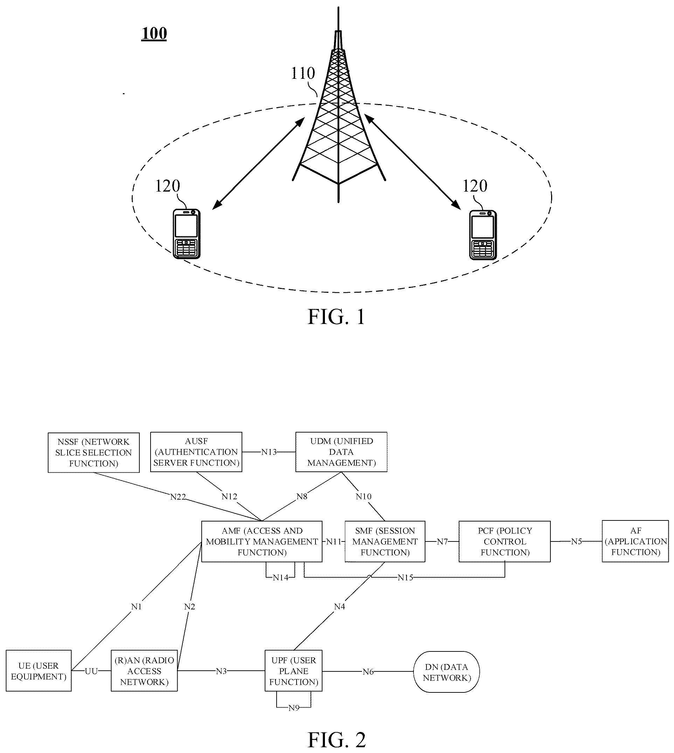

FIG. 1 exemplarily illustrates a communication system 100. The communication system includes one network device 110 and two terminal devices 120. In a possible embodiment, the communication system 100 may include multiple network devices 110, and there can be other numbers of terminal devices 120 in a coverage area of each of the network devices 110, which is not limited in embodiments of the present disclosure. In a possible embodiment, the communication system 100 may further include other network entities such as a mobility management entity (MME), an access and mobility management function (AMF), etc., which is not limited in embodiments of the present disclosure. The network device may further include an access network (AN) device and a core network (CN) device. That is, the wireless communication system further includes multiple CNs for communicating with the AN device. The AN device may be an evolutional Node B (referred to as eNB or e-NodeB for short), a macro base station, a micro base station (also referred to as "small base station"), a pico base station, an access point (AP), a transmission point (TP), or new generation node B (a gNodeB) in a long-term evolution (LTE) system, a next generation (mobile communication system) next radio (NR) system, a license assisted access long-term evolution (LAA-LTE) system, etc. It can be understood that, in embodiments of the present disclosure, a device with communication functions in a network/system can be referred to as a "communication device". Taking the communication system 100 illustrated in FIG. 1 as an example, the communication device may include a network device and a terminal device with a communication function. The network device and the terminal device may be specific devices as described above, which will not be elaborated herein. The communication device may further include other devices such as a network controller, an MME, or other network entities in the communication system 100, which will not be limited in embodiments of the present disclosure.

To facilitate the understanding of embodiments of the present disclosure, basic processes and basic concepts involved in embodiments of the present disclosure are briefly described below. It can be understood that, the basic processes and basic concepts introduced below do not construe any limitation to embodiments of the present disclosure.

FIG. 2 illustrates an architectural diagram of a 5G network system. The 5G network system includes the following. A network slice selection function (NSSF) is mainly responsible for the management of information related to network slices, for example, selecting network slices for a terminal device. An authentication server function (AUSF) is responsible for implementing the identity authentication function of user access. A unified data management (UDM) is responsible for the management and storage of subscription data and authentication data. An AMF is responsible for accomplishing mobility management, security anchor point, security context management, etc. In addition to the mobility management for the UE, the AMF is also responsible for forwarding a session management-related message between the UE and a session management function (SMF). The SMF is responsible for accomplishing session management and UE IP address allocation and management. A policy control function (PCF) is responsible for formulating policies related to mobility management, session management, and billing for the UE. An application function (AF) is used in external application servers. A user plane function (UPF) is responsible for complex user-plane processing, such as forwarding traffic, reporting traffic usage, quality of service (QoS) policy enforcement, etc., between a radio access network (RAN) and the Internet. A data network (DN) is an external data network of a 5G core (5GC) (e.g., the Internet). In addition, data transmission is performed over corresponding interfaces between nodes of the 5GC, between the UE and the nodes of the 5GC, between the UE and the RAN, and between the RAN and the nodes of the 5GC. For example, as illustrated in FIG. 2, data transmission is performed between the AMF and the NSSF in the 5GC over an interface N22. Data transmission is performed between the AMF and the SMF over an interface N11. Data transmission is performed between the AMF and the AUSF over an N12. Data transmission is performed between the AMF and the UDM over an interface N8. Data transmission is performed between the SMF and the UPF over an interface N4. Data transmission is performed between the UPF and the external data network over an interface N6 and between the UPF and the AN over an interface N3. An access stratum (AS) connection is performed between the UE and the AN over an interface Uu for AS message interaction and wireless data transmission. A non-access stratum (NAS) connection is performed between the UE and the AMF over an interface N1 for NAS message interaction. Data transmission is performed between the RAN and the AMF over an interface N2. Data transmission is achieved between the RAN and the UPF over an interface N3. It can be understood that, the above only describes some of the interfaces between the nodes, and other interfaces between the other nodes of the 5GC in FIG. 2 are not repeated herein.

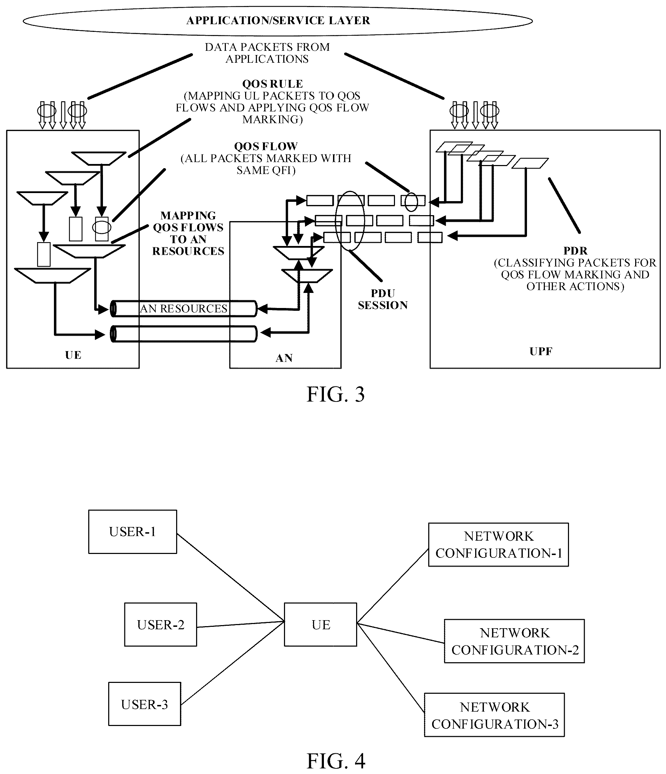

A QoS mechanism in a network architecture of related protocols is as follows. A CN network element (SMF) determines a policy and charging control (PCC) rule according to policy information, subscription information, and local configuration, and then generates a QoS rule, a packet detection rule (PDR), and a QoS parameter(s) according to the PCC rule. The QoS rule is used by a UE side to bind an uplink (UL) service data flow with a QoS flow. The PDR is used by a UPF side to bind a downlink (DL) service data flow with a QoS flow. The QoS parameter is a parameter used for generating each QoS flow. The QoS parameter is sent to an RAN side to generate a data radio bearer (DRB) corresponding to the QoS flow, thereby guaranteeing end-to-end (guaranteeing an air interface and a CN side) transmission quality. In conjunction with FIG. 3, in UL transmission, a UE side receives data packets from applications, and based on a QoS rule, the UE side maps UL packets to a QoS flow and applies QoS flow marking. Then, the UE marks all packets in the QoS flow with the same QoS flow identifier (QFI), and maps the QoS flow to AN resources and sends it to the AN. An RAN (i.e., an AN illustrated in FIG. 3) converts the QoS flow that is mapped to the AN resources (i.e., the AN resources corresponding to each QoS flow generated by the AN based on the QoS parameter) into a protocol data unit (PDU) session and sends the PDU session to a UPF. In DL transmission, the PDF side receives data packets from applications, classifies packets for QoS flow marking and other actions based on a PDR, marks all packets in the QoS flow with the same QFI, combines the QoS flow into a PDU session, and sends the PDU session to the RAN (i.e., the AN illustrated in FIG. 3). The RAN side sends the received PDU session to the UE side through the AN resources.

Subscription information, a UE policy, generated context information, etc., in the related protocols are implemented based on a UE identity (ID). However, even if a terminal has the same UE ID, the terminal may be used by different users at different times (i.e., a user ID may be different), and different users have different requirements for the network due to service preferences or other reasons, but this functionality cannot be differentiated in a 3GPP network. For the same UE, when the user using the UE changes, a corresponding communication network configuration (referred to as "network configuration") is changed to meet the differentiated requirements of different users or services, which cannot be implemented with the current mechanism. In the present disclosure, configuration is a generalized term, which can mean that subscription information, policy information, etc., of the network corresponds to different contents according to the change of the user, and then a CN needs to adjust an access and mobility management context, a UE policy, a session management context, etc. thereof. For example, with reference to FIG. 4, a user using one UE may be user-1, user-2, or user-3. However, with the current related art, it cannot be implemented that user-1 may use network configuration-1, user-2 may use network configuration-2, and user-3 may use network configuration-3.

It can be understood that, the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship. It can be understood that, "indication" referred to in embodiments of the present disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that there is an association relationship between A and B. In the elaboration of embodiments of the present disclosure, the term "correspondence" may mean that there is a direct or indirect correspondence between the two, may mean that there is an association between the two, may mean a relationship of indicating and indicated or configuring and configured, etc.

In order for a better understanding of the technical solutions of embodiments of the present disclosure, the technical solutions of the present disclosure will be described in detail below in connection with embodiments. The following related art, as an optional scheme, can be arbitrarily combined with the technical solutions of embodiments of the present disclosure, which shall all belong to the protection scope of embodiments of the present disclosure.

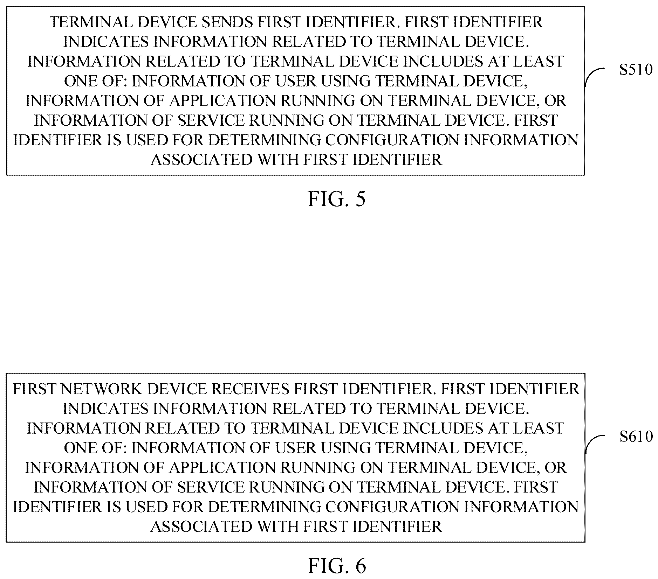

FIG. 5 is a schematic flowchart of a communication method according to an embodiment of the present disclosure. The method includes at least part of the following.

At S510, a terminal device sends a first identifier. The first identifier indicates information related to the terminal device. The information related to the terminal device includes at least one of: information of a user using the terminal device, information of an application running on the terminal device, or information of a service running on the terminal device. The first identifier is used for determining configuration information associated with the first identifier.

FIG. 6 is a schematic flowchart of a communication method according to another embodiment of the present disclosure. The method includes at least part of the following.

At S610, a first network device receives a first identifier. The first identifier indicates information related to a terminal device. The information related to the terminal device includes at least one of: information of a user using the terminal device, information of an application running on the terminal device, or information of a service running on the terminal device. The first identifier is used for determining configuration information associated with the first identifier.

The first network device can be any kind of device at a network side. In an embodiment, the network side may at least include an AN side and a CN side. In this case, the first network device may be a first AN device or a first CN device. In an embodiment, the network side includes a CN side. In this case, the first network device may be a first CN device.

The first CN device may be an AMF or an SMF. It can be understood that, the above is only an exemplary illustration, and in actual processing, the first CN device is not limited to the CN network elements enumerated above, and all possible network elements of the first CN device are not enumerated herein.

The first identifier can be a value of a first type of identifier. The first type of identifier is different from a permanent identifier in the related art. In some embodiments, the permanent identifier may include, but is not limited to, at least one of: a subscription permanent identifier (SUPI), a subscription concealed identifier (SUCI), a permanent equipment identifier (PEI), a 5G globally unique temporary identifier (5G-GUTI), an internal-group identifier (IGI), a generic public subscription identifier (GPSI), etc. The SUPI is a globally unique 5G SUPI that shall be allocated to each subscriber in the 5G System and provisioned in the UDM/unified data repository (UDR). The SUPI is used only inside the 3GPP system. The SUPI may contain an international mobile subscriber identity (IMSI) or a network-specific identifier, where the network-specific identifier can be used for private networks. The SUCI is a privacy preserving identifier containing a concealed SUPI. A format supported for a PEI parameter is an IMEI.

The first type of identifier indicates at least one of a user, an application, or a service. Correspondingly, the first identifier indicates information related to the terminal device, the information related to the terminal device includes at least one of: information of a user using the terminal device, information of an application running on the terminal device, or information of a service running on the terminal device.

In some embodiments, the first identifier indicates information of an application running on the terminal device and/or information of a service running on the terminal device.

The information of the application may refer to an identifier of the application, and the identifier of the application may include at least one of: a name of the application, an ID of the application, a number of the application, etc. The information of the service may refer to an identifier of the service, and the identifier of the service may include at least one of: a name of the service, an ID of the service, a number of the service, etc.

The first identifier indicates the information of the application running on the terminal device, which can mean that the first identifier is a first value and the first value indicates the information of the application running on the terminal device. For example, the first value is the identifier of the application running on the terminal device, the first value is associated with the identifier of the application running on the terminal device, or the first value has a correspondence with the identifier of the application running on the terminal device. The first identifier indicates the information of the service running on the terminal device, which can mean that the first identifier is a first value and the first value indicates the information of the service running on the terminal device. For example, the first value is the identifier of the service running on the terminal device, the first value is associated with the identifier of the service running on the terminal device, or the first value has a correspondence with the identifier of the service running on the terminal device.

In some embodiments, the first identifier indicates the information of the user using the terminal device. The information of the user using the terminal device includes at least one of: an identifier of the user using the terminal device, or biometric information of the user using the terminal device.

The information of the user may be the identifier of the user, which may be expressed, for example, as an ID of the user.

The biometric information may include at least one of: fingerprints, face features, voice features, etc. The biometric information may refer to at least one of specific feature information of fingerprints, specific feature information of face features, or specific feature information of voice features. Alternatively, the biometric information may refer to at least one of a fingerprint ID, a face feature ID, a voice feature ID, etc. Exemplarily, the biometric information may also be referred to as "biological information", and in the following, unless otherwise specified, the biometric information has the same meaning as the biological information.

For example, the first identifier indicates the information of the user using the terminal device, which can mean that the first identifier is a first value and the first value indicates the information of the user using the terminal device. For example, the first value is the identifier of the user using the terminal device, the first value is associated with the identifier of the user using the terminal device, or the first value has a correspondence with the identifier of the user. Alternatively, the first value is a fingerprint ID of the user using the terminal device, the first value is associated with the fingerprint ID of the user using the terminal device, or the first value has a correspondence with fingerprints (or fingerprint ID) of the user, etc., and all possible cases are not exhaustively listed herein.

As described in the foregoing embodiment, the first identifier can be a first identifier of the first type of identifier, and the first identifier can vary with at least one of the user using the terminal device, the application running on the terminal device, or the service running on the terminal device. The first identifier varies with at least one of the user using the terminal device, the application running on the terminal device, or the service running on the terminal device, which can mean that a different value of the first identifier indicates at least one of: a different user using the terminal device, a different application running on the terminal device, or a different service running on the terminal device.

The first identifier can contain one or more bits, and the number of bits is not limited in embodiments of the present disclosure. As long as the number of bits is greater than or equal to 1, it falls within the protection scope of embodiments of the present disclosure. A value of the first identifier is values of the one or more bits, i.e., the value of the first identifier is a combination of a value of each of the one or more bits. The value of the first identifier can indicate at least one of the user using the terminal device, the application running on the terminal device, or the service running on the terminal device. For example, the number of bits contained in the first identifier is 2, a value of each of the two bits is 0 and 1, respectively, and thus values "01" can indicate user A using the terminal device.

In an example, the first identifier may be a direct indication of specific information. For example, the first identifier contains multiple bits, and a combination of a value of each of the multiple bits is specific information to be indicated. For example, the combination of the value of each bit contained in the first identifier is the value of the first identifier, and the value of the first identifier may be original information of the biological information, compressed information of the biological information, or an identifier of an App service running on the terminal device.

In another example, the first identifier may be a temporary identifier, and the temporary identifier may be dynamically updated by the network side to the terminal device, or may be a value pre-configured or pre-negotiated by the terminal device. The value of the first identifier has a correspondence with specific information, which may be statically pre-configured by the terminal device or dynamically allocated by the network to the terminal device. For example, the first identifier contains three bits, values of the three bits are 001, i.e., the value of the first identifier is 001, and the value of the first identifier 001 has a correspondence with fingerprints of the biological information of user A, i.e., the value of the first identifier 001 indicates the biological information of user A. For another example, the first identifier contains three bits, values of the three bits are 002, i.e., the value of the first identifier is 002, and the value of the first identifier 002 has a correspondence with fingerprints of the biological information of user B, i.e., the value of the first identifier 002 indicates the biological information of user B.

For example, a different value of the first identifier can indicate at least one of: a different user using the terminal device, a different application (or service) running on the terminal device, etc. For example, in the case where user A runs application *a*1 on the terminal device, the first identifier is a first value, and the first value is associated with an identifier of user A and an identifier of application *a*1. For example, in the case where user A runs application *a*2 on the terminal device, the first identifier is a second value, and the second value is associated with the identifier of user A and an identifier of application *a*2. For example, in the case where user A runs application *a*1 on the terminal device, the first identifier is a third value (the third value is associated with biometric information of user A and the identifier of application *a*1), and in the case where user B runs application *a*1 on the terminal device, the first identifier is a fourth value (the fourth value is associated with an identifier of user B and the identifier of application *a*1)*.* All possible cases are not exhaustively listed herein.

For example, a different value of the first identifier indicates biometric information of a different user using the terminal device or different biometric information of the same user using the terminal device. For example, when different users use the same terminal device, the value of the first identifier will change. For another example, when the same user uses the same terminal device and the biometric information (fingerprints, face features, voice features, etc.,) of the user changes, the value of the first identifier changes.

In some other examples, the first identifier can indicate at least one of: information of a user corresponding to each device in a device group to which the terminal device belongs, information of an application running on each device in the device group to which the terminal device belongs, or information of a service running on each device in the device group to which the terminal device belongs. In this example, the first identifier can be in the form of list. For example, when the first identifier indicates the information of the user corresponding to each device in the device group to which the terminal device belongs, the first identifier can be a list, where the list contains one or more first sub-identifiers, and each sub-identifier indicates information of a user corresponding to one device. All possible representation forms of the first identifier are not exhaustively listed herein.

In some possible examples, the first identifier may indicate at least one of: information of a user of another device associated with the terminal device, information of an application running on another device associated with the terminal device, or information of a service running on another device associated with the terminal device. Another device associated with the terminal device can mean that the terminal device serves as a relay device or a proxy device for another device. All possible content that may be indicated by the first identifier is not exhaustively listed herein, and as long as the first identifier is related to at least one of a user, an application, a service, etc., it falls within the protection scope of embodiments of the present disclosure.

In some possible embodiments, the terminal device sends the first identifier, which can mean that the terminal device sends the first identifier to the first network device. Correspondingly, the first network device receives the first identifier, which can mean that the first network device receives the first identifier sent by the terminal device.

In an embodiment, the first network device is a first AN device. In this case, the first identifier may be carried in an AS message. In an embodiment, the first network device may be a first CN device. In this case, the first identifier may be carried in a first NAS message. The first NAS message may be related to an actual process, i.e., the first NAS message may be different when the process is different. In some embodiments, the first identifier is carried in at least one of: a registration request message, a registration update message, a session establishment request message, or a session modification request message. That is, the first NAS message can include at least one of a registration request message, a registration update message, a session establishment request message, or a session modification request message.

In some embodiments, the first identifier is used for determining the configuration information associated with the first identifier, which can mean that the first identifier is used by the first network device to determine the configuration information associated with the first identifier. In some embodiments, the configuration information can refer to a network configuration. In some embodiments, the configuration information associated with the first identifier includes at least one of: a UE policy associated with the first identifier, subscription information associated with the first identifier, a policy rule associated with the first identifier, or one or more electronic devices associated with the first identifier. It can be noted that, the one or more electronic devices associated with the first identifier can include the terminal device.

In some embodiments, after the first network device receives the first identifier, the method further includes at least one of the following. The first network device sends the first identifier to a second network device, where the first identifier is used by the second network device to determine a UE policy associated with the first identifier. The first network device obtains a policy rule associated with the first identifier from the second network device. The first network device obtains subscription information associated with the first identifier from a third network device. The first network device determines, based on a second association relationship, the subscription information associated with the first identifier, where the second association relationship includes subscription information associated with each of one or more second identifiers. The first network device determines, based on a third association relationship, the policy rule associated with the first identifier, where the third association relationship includes a policy rule associated with each of the one or more second identifiers. The first network device obtains the UE policy associated with the first identifier from the second network device. The first network device determines, based on a first association relationship, the UE policy associated with the first identifier, where the first association relationship includes a UE policy associated with each of the one or more second identifiers.

The one or more electronic devices associated with the first identifier can be determined by the first network device based on a fourth association relationship, where the fourth association relationship includes one or more electronic devices associated with each of the one or more second identifiers. The fourth association relationship may be pre-stored in the first network device, or may be sent to the first network device by the second network device or the third network device. Alternatively, the one or more electronic devices associated with the foregoing first identifier may be obtained by the first network device from the second network device or the third network device. The second network device or the third network device can determine, based on the fourth association relationship stored therein, the one or more electronic devices associated with the first identifier, and send them to the first network device.

In some possible examples, the second network device and the third network device may be devices (or network elements) at the CN side. In some other possible examples, one of the second network device and the third network device may be a device at the CN side, and the remaining may not be the device at the CN side. All possible device types of the second network device and the third network device are not exhaustively listed and limited herein.

The first association relationship, the second association relationship, the third association relationship, and the fourth association relationship can be a first type of association relationship. The first type of association relationship is different from a second type of association relationship in the related protocol. For example, the second type of association relationship can include at least one of subscription information, policy information, a UE policy, etc., associated with the permanent identifier, whereas the first type of association relationship refers to at least one of subscription information, policy information, a UE policy, other terminals, etc., associated with the first identifier.

Any second identifier is any value of the first type of identifier. That is, both the second identifier and the first identifier are the first type of identifier. A different second identifier can be a different value of the first type of identifier, while the first identifier is a specific value of the first type of identifier, where the specific value indicates a user using the terminal device and/or an application (and/or a service) running on the terminal device.

The first association relationship can refer to an association relationship between each second identifier and a UE policy, i.e., a UE policy corresponding to a different value of the first type of identifier. The UE policy can include at least one of: an access network discovery & selection policy (ANDSP), a UE route selection policy (URSP), a 5G proximity-based service (ProSe) policy, a V2X policy, an access traffic steering, switching, and splitting (ATSSS) policy, etc.

The second association relationship can refer to an association relationship between each second identifier and subscription information, i.e. content of subscription information corresponding to a different value of the first type of identifier. The subscription information can include, but is not limited to, at least one of: an access and access and mobility subscription, a session management subscription, a slice selection subscription, etc. The access and access and mobility subscription (or access and access and mobility subscription information) can be obtained in a registration process of the terminal device. The session management subscription (or session management subscription information) can be obtained in a session establishment process of the terminal device. The slice selection subscription (or slice selection subscription information) can be obtained in the registration process of the terminal device.

The third association relationship can be an association relationship between each second identifier and a policy rule, i.e., the content of a policy rule corresponding to a different value of the first type of identifier. The policy rule may also be referred to as "policy information", and can be used for obtaining various related parameters in conjunction with the subscription information and a local configuration, for example, can include at least one of a QoS rule, a PDR, a QoS parameter, etc.

The fourth association relationship may be an association relationship between each second identifier and one or more electronic devices, i.e., which terminals are enabled/allowed to be used for at least one of a user, a service, or an application corresponding to any second identifier (or referred to as any value of the first type of identifier). In the fourth association relationship, an association relationship between any second identifier and the one or more electronic devices can be an association relationship between any second identifier and an identifier of each of the one or more electronic devices, and the identifier of any electronic device can be a permanent identifier of the electronic device, for example, can be a SUPI of the electronic device.

In some embodiments, the multiple association relationships mentioned above can be stored in at least one of the first network device, the second network device, or the third network device. Different network devices may store different association relationships, different network devices may store the same association relationship, or different network devices may store at least partially different association relationships.

In some possible embodiments, the first identifier may be carried in a registration request message.

It can be noted that, the registration request message can further carry, in addition to the first identifier, other information as specified in the related protocol. For example, the registration request message can further carry at least one of: a UE ID (e.g., an IMSI or a SUPI), a network slice identifier (e.g., a single network slice selection assistance information (S-NSSAI)), etc., and various types and functions of information that may be carried in the registration request message are not exhaustively listed in embodiments of the present disclosure. A UE ID and/or a network slice identifier of the terminal device may be combined with a user ID (i.e., the first identifier) to obtain at least one of policy information, subscription information, etc., associated with the terminal device, or the UE ID and/or the network slice identifier of the terminal device may be separately used for obtaining at least one of the policy information, the subscription information, etc.

After receiving the registration request message, the first network device can obtain the first identifier reported by the terminal device from the registration request message. Further, the first network device can perform at least one of the following processing. The first network device sends the first identifier to the second network device, where the first identifier is used by the second network device to determine a UE policy associated with the first identifier. The first network device obtains the UE policy associated with the first identifier from the second network device. The first network device determines, based on the first association relationship, the UE policy associated with the first identifier. The first network device obtains subscription information associated with the first identifier from a third network device. The first network device determines, based on the second association relationship, the subscription information associated with the first identifier.

Before the first network device sends the first identifier to the second network device, the method can further include the following. The first network device determines the second network device. In some embodiments, the first network device determines the second network device, which can mean that the first network device determines a second network device corresponding to the first identifier according to the first identifier carried in the registration request message, and/or that the first network device determines a second network device corresponding to the terminal device according to the UE ID carried in the registration request message. That is, the first network device can select one of one or more candidate network devices as the second network device. The second network device can refer to any one of the one or more candidate network devices that is capable of determining the UE policy, and further, the second network device can be any one of the one or more candidate network devices that stores the first association relationship.

After the terminal device sends the first identifier, the method further includes one of the following. The terminal device receives a UE policy associated with the first identifier. The terminal device determines, based on the first association relationship, the UE policy associated with the first identifier, where the first association relationship includes a UE policy associated with each of one or more second identifiers. Correspondingly, in the processing of the first network device, the method further includes one of the following. The first network device sends the UE policy associated with the first identifier to the terminal device. The first network device sends the first association relationship to the terminal device.

In some possible examples, after the terminal device sends the first identifier, the method further includes the following. The terminal device receives the UE policy associated with the first identifier.

In some embodiments, the first network device sends the first identifier to the second network device. After the second network device receives the first identifier sent by the first network device, the second network device can determine, based on the first association relationship, a second identifier that matches (or is the same as) the first identifier, and then take a UE policy associated with the matched second identifier as the UE policy associated with the first identifier. Further, the second network device can send the UE policy associated with the first identifier to the terminal device. Correspondingly, the terminal device receives the UE policy associated with the first identifier as follows. The terminal device can receive the UE policy associated with the first identifier sent by the second network device.

The second network device can send the UE policy associated with the first identifier to the terminal device in a UE configuration update (UCU) process. It can be understood that, the above is only an exemplary illustration, and in actual processing, the second network device can also send the UE policy associated with the first identifier to the terminal device in other processes, which are not exhaustively listed herein.

In some embodiments, the first network device sends the first identifier to the second network device. After the second network device receives the first identifier sent by the first network device, the second network device can determine, based on the first association relationship, the UE policy associated with the first identifier. Further, the second network device can send the UE policy associated with the first identifier to the first network device. The first network device obtains the UE policy associated with the first identifier from the second network device, and then the first network device sends the UE policy associated with the first identifier to the terminal device. The terminal device can receive the UE policy associated with the first identifier sent by the first network device.

In some embodiments, the first network device sends the first identifier to the second network device. After the second network device receives the first identifier sent by the first network device, the second network device can send the first association relationship to the first network device. The first network device can determine, based on the first association relationship, the UE policy associated with the first identifier, and then the first network device sends the UE policy associated with the first identifier to the terminal device. The terminal device can receive the UE policy associated with the first identifier sent by the first network device.

In some possible examples, after the terminal device sends the first identifier, the method further includes the following. The terminal device determines, based on the first association relationship, the UE policy associated with the first identifier.

Before the terminal device determines, based on the first association relationship, the UE policy associated with the first identifier, the method can further include the following. The terminal device receives the first association relationship. That is, in this example, after the terminal device is powered on, the terminal device sends the first identifier via the registration request message for the first time, and thus the terminal device can first receive the first association relationship and then determine, based on the first association relationship, the UE policy associated with the first identifier.

In some embodiments, the terminal device can receive the first association relationship from the second network device. For example, the first network device sends the first identifier to the second network device. After the second network device receives the first identifier sent by the first network device, the second network device can send the first association relationship stored therein to the terminal device, that is, the terminal device can receive the first association relationship sent by the second network device. In this example, the second network device can send the first association relationship to the terminal device in a UCU process. It can be understood that, the above is only an exemplary illustration, and in actual processing, the second network device can also send the first association relationship to the terminal device in other processes, which are not listed herein.

In some embodiments, the terminal device can receive the first association relationship from the first network device. For example, the first network device sends the first identifier to the second network device. After the second network device receives the first identifier sent by the first network device, the second network device can send the first association relationship to the first network device, and the first network device sends the first association relationship to the terminal device.

In some possible examples, after the first network device receives the first identifier, the method further includes one of the following. The first network device obtains the subscription information associated with the first identifier from the third network device. The first network device determines, based on the second association relationship, a second identifier that matches (or is the same as) the first identifier, and then takes subscription information associated with the matched second identifier as the subscription information associated with the first identifier.

In some embodiments, the first network device obtains the subscription information associated with the first identifier from the third network device as follows. The first network device sends the first identifier to the third network device, and receives the subscription information associated with the first identifier sent by the third network device.

Before the first network device sends the first identifier to the third network device, the method can further include the following. The first network device determines the third network device. Exemplarily, the first network device determines the third network device, which can mean that the first network device determines a third network device corresponding to the first identifier according to the first identifier carried in the registration request message, and/or that the first network device determines a third network device corresponding to the terminal device according to the UE ID carried in the registration request message. That is, there may be multiple network devices at the CN side, and the first network device can select one of one or more candidate network devices as the third network device. The third network device can refer to any one of the one or more candidate network devices that is capable of determining the subscription information, and further, the third network device can be any one of the one or more candidate network devices that stores the second association relationship.

The first network device can send the first identifier to the third network device and receive the subscription information associated with the first identifier sent by the third network device as follows. The first network device sends the first identifier to the third network device. After the third network device receives the first identifier sent by the first network device, the third network device can determine, based on the second association relationship, a second identifier that matches (or is the same as) the first identifier, and then take subscription information associated with the matched second identifier as the subscription information associated with the first identifier. Then, the first network device receives the subscription information associated with the first identifier sent by the third network device.

In some embodiments, the first network device determines, based on the second association relationship, the subscription information associated with the first identifier.

The method further includes the following. The first network device sends the first identifier to the third network device, and receives the second association relationship sent by the third network device. The processing of selecting or determining the third network device in this example is the same as that in the foregoing embodiment, which will not be repeated.

For example, the first network device sends the first identifier to the third network device. After the third network device receives the first identifier sent by the first network device, the third network device can send the second association relationship to the first network device, and the first network device can determine, based on the second association relationship, a second identifier that matches (or is the same as) the first identifier, and then take subscription information associated with the matched second identifier as the subscription information associated with the first identifier.

For the foregoing embodiment, taking the first network device as an AMF, the second network device as a PCF, and the third network device as a PUF as an example, in a single operation, all the association relationships mentioned above may be sent by the CN network elements, such as a UDM, a PCF, etc., to nodes that need an association relationship, respectively (e.g., an AMF obtains an association relationship between each second identifier and the access and mobility management subscription, an SMF obtains an association relationship between each second identifier and the session management subscription information, or the terminal device obtains an association relationship between each second identifier and the UE policy), or only content corresponding to the current first identifier may be sent by the CN network elements, such as a UDM, a PCF, etc., to nodes that needs an association relationship.

In some embodiments, the first network device can store the fourth association relationship. After the first network device receives the first identifier, the first network device can determine, based on the first identifier and the fourth association relationship, the one or more electronic devices associated with the first identifier. The first network device determines whether the one or more electronic devices associated with the first identifier contain the terminal device. If contain, the first network device can further obtain the configuration information associated with the first identifier. It can be understood that, the above is only an illustration with an example that the fourth association relationship is stored in the first network device. In some possible embodiments, the fourth association relationship may also be stored in the subscription information. For example, the subscription information is stored in the third network device, and the fourth association relationship is stored in the subscription information. Taking the third network device as a UDM as an example, the first network device can first send the first identifier to the UDM. The UDM can determine, based on the first identifier and the fourth association relationship in the subscription information, the one or more electronic devices associated with the first identifier, and then determine whether the one or more electronic devices associated with the first identifier contain the terminal device. If contain, the UDM may notice the first network device to further obtain the configuration information associated with the first identifier, may directly send the subscription information associated with the first identifier to the first network device, or may directly send the second association relationship to the first network device.

In some possible embodiments, the first identifier may be carried in a registration update message.

It can be noted that, the registration update message can further carry, in addition to the first identifier, other information as specified in the related protocol, which will not be exhaustively listed herein.

It can also be noted that, the registration update message may carry the first identifier for the first time, or the registration update message may carry the first identifier again after the registration request message carries the first identifier. For example, if the registration update message carries the first identifier again after the registration request message carries the first identifier, the first identifier carried in the registration request message has a different value from the first identifier carried in the registration update message. For example, if the registration request message carries the first identifier, the value of the first identifier is a first value. After the terminal device completes a registration, in the case where the user using the terminal device and/or the application running on the terminal device changes, the value of the first identifier will also change, for example, to a second value. In this case, the terminal device can send the first identifier again via the registration update message.

After the first network device receives the registration update message, the first network device can perform at least one of the following processing. The first network device sends the first identifier to the second network device, where the first identifier is used by the second network device to determine a UE policy associated with the first identifier. The first network device obtains the UE policy associated with the first identifier from the second network device. The first network device determines, based on the first association relationship, the UE policy associated with the first identifier. The first network device obtains subscription information associated with the first identifier from a third network device. The first network device determines, based on the second association relationship, the subscription information associated with the first identifier.

The detailed description of the first network device determining the second network device before the first network device sends the first identifier to the second network device is the same as that in the foregoing embodiment, which will not be repeated.

In some possible examples, after the terminal device sends the first identifier, the method further includes the following. The terminal device receives the UE policy associated with the first identifier.

Optionally, the terminal device can receive the UE policy associated with the first identifier sent by the second network device. This processing is the same as that in the foregoing embodiment, which is not repeated. Optionally, the terminal device can receive the UE policy associated with the first identifier sent by the first network device. This processing is the same as that in the foregoing embodiment, which is not repeated.

Different from the foregoing embodiment, after the first network device receives the first identifier, the first network device can first detect whether the first association relationship is stored locally. If not stored, the first network device sends the first identifier to the second network device, and then can perform any processing in the foregoing embodiment. If the first association relationship is stored in the first network device, the first network device can directly determine, based on the first association relationship, the UE policy associated with the first identifier, and then send the UE policy associated with the first identifier to the terminal device. That is, the terminal device receives the UE policy associated with the first identifier sent by the first network device.

In some possible examples, after the terminal device sends the first identifier, the method further includes the following. The terminal device determines, based on the first association relationship, the UE policy associated with the first identifier. The specific processing of the terminal device determining, based on the first association relationship, the UE policy associated with the first identifier is the same as that in the foregoing embodiment, which will not be repeated.

Before the terminal device determines, based on the first association relationship, the UE policy associated with the first identifier, the method can further include the following. The terminal device receives the first association relationship. The possible processing of the terminal device receiving the first association relationship in this example is the same as that in the foregoing embodiment, which will not be repeated.

In a case, after the terminal device is powered on, the registration request message sent first by the terminal device does not carry the first identifier, and thus the terminal device can send the first identifier via the registration update message. After the terminal device receives the first association relationship, the terminal device determines, based on the first association relationship, the UE policy associated with the first identifier. In another case, after the terminal device is powered on, the registration request message sent first by the terminal device carries the first identifier, and the terminal device stores the first association relationship after receiving the first association relationship. Then, the terminal device can send the first identifier (i.e., a first identifier with a changed value) via the registration update message, and directly determine, based on the first association relationship, the UE policy associated with the first identifier.

After the first network device receives the first identifier, the first network device can first detect whether the first association relationship is stored locally. If not stored, the first network device sends the first identifier to the second network device, and then can perform any processing in the foregoing embodiment. If the first association relationship is stored in the first network device, the first network device sends the first association relationship to the terminal device.

In some possible examples, after the first network device receives the first identifier, the method further includes one of the following. The first network device obtains the subscription information associated with the first identifier from the third network device. The first network device determines, based on the second association relationship, the subscription information associated with the first identifier.

Optionally, the processing of the first network device obtaining the subscription information associated with the first identifier from the third network device is the same as that in the foregoing embodiment, which will not be repeated.

Optionally, the first network device determines, based on the second association relationship, the subscription information associated with the first identifier.

The method can further include the following. The first network device sends the first identifier to the third network device, and receives the second association relationship sent by the third network device. The processing of selecting or determining the third network device in this example is the same as that in the foregoing embodiment, which will not be repeated.

In a case, after the terminal device is powered on, a registration request message sent first by the terminal device does not carry the first identifier, and thus the terminal device can send the first identifier via the registration update message. Then, the first network device sends the first identifier to the third network device, receives the second association relationship sent by the third network device, and determines, based on the second association relationship, the subscription information associated with the first identifier. In another case, after the terminal device is powered on, the registration request message sent first by the terminal device carries the first identifier, and the first network device sends the first identifier to the third network device, and stores the second association relationship after receiving the second association relationship sent by the third network device. Then, the terminal device can send the first identifier (i.e., a first identifier with a changed value) via the registration update message, and the first network device can directly determine, based on the second association relationship stored locally, the subscription information associated with the first identifier.

It can also be noted that, in embodiments of the present disclosure, the subscription information associated with the first identifier can at least include at least one of: an access and access and mobility subscription (or an access and access and mobility subscription information) associated with the first identifier, or a slice selection subscription (or a slice selection subscription information) associated with the first identifier.

In some possible embodiments, the method further includes the following. The terminal device sends first indication information, where the first indication information indicates at least one of: the terminal device supporting reporting the first identifier, the terminal device being capable of identifying the first identifier, or the terminal device being capable of processing the first identifier. Correspondingly, the first network device receives the first indication information sent by the terminal device, where the first indication information indicates at least one of: the terminal device supporting reporting the first identifier, the terminal device being capable of identifying the first identifier, or the terminal device being capable of processing the first identifier.

The first indication information may be carried in a second NAS message, and the second NAS message may be the same as or different from the first NAS message. In a preferable example, the second NAS message can be a registration request message, that is, the first indication information can be carried in the registration request message.

The first indication information indicates that the terminal device supports reporting the first identifier, that is, the first indication information can indicate that a terminal supports reporting an identifier with the same type as the first identifier (i.e., supports reporting the first type of identifier). The first indication information indicates that the terminal device is capable of identifying the first identifier, that is, the first indication information can indicate that the terminal is capable of identifying the identifier with the same type as the first identifier (i.e., is capable of identifying the first type of identifier). The first indication information indicates that the terminal device is capable of processing the first identifier, that is, the first indication information can indicate that the terminal is capable of processing the identifier with the same type as the first identifier (i.e., is capable of processing the first type of identifier).

Optionally, the first indication information may be sent separately. That is, the registration request message may carry only the first indication information but not the first identifier.

The method further includes the following. The first network device sends second indication information to the terminal device, where the second indication information indicates at least one of: a network side supporting processing the first identifier (or the network side supporting processing the first type of identifier), the network side being capable of identifying the first identifier (or the network side being capable of identifying the first type of identifier), the network side requesting the terminal device to report the first identifier (or the network side requesting the terminal device to report the first type of identifier), the network side requiring the terminal device to report the first identifier (or the network side requiring the terminal device to report the first type of identifier), or the network side allowing the terminal device to report the first identifier (or the network side allowing the terminal device to report the first type of identifier). Correspondingly, the method further includes the following. The terminal device receives the second indication information.

In some embodiments, the network side can include an AN side and/or a CN side, i.e. the second indication information can be sent by the first network device when at least one of the first network device, the second network device, or the third network device at the AN side and/or the CN side has at least one of the following functions: supporting processing the first identifier (or supporting processing the first type of identifier), being capable of identifying the first identifier (or being capable of identifying the first type of identifier), requesting the terminal device to report the first identifier (or requesting the terminal device to report the first type of identifier), requiring the terminal device to report the first identifier (or requiring the terminal device to report the first type of identifier), or allowing the terminal device to report the first identifier (or allowing the terminal device to report the first type of identifier).

In some embodiments, in the case where the network side includes an AN, the first network device, the second network device, and the third network device may be different AN devices. In some embodiments, in the case where the network side includes a CN side, the first network device, the second network device, and the third network device may be different CN devices, such as a first CN device, a second CN device, and a third CN device, respectively. In some embodiments, in the case where the network side includes an AN side and a CN side, the first network device may be a first AN device or a first CN device, the second network device may be a second AN device or a second CN device, and the third network device may be a third AN device or a third CN device.

The second indication information may be carried in a third NAS message, and the third NAS message is different from the second NAS message. In a preferable example, the third NAS message may be a registration accept message, that is, the second indication information may be carried in the registration accept message.

For example, after the first network device receives the first indication information sent by the terminal device, in the case where the first network device can determine that the CN side has the second network device and/or the third network device that are capable of processing the first identifier, the first network device can send the second indication information to the terminal device. A manner of the first network device determining the second network device and/or the third network device can mean that the first network device can select a second candidate network device and a third candidate network device from one or more candidate network devices. The first network device can determine whether both the selected second candidate network device and the selected third candidate network device support processing the first identifier. If both support, the first network device sends the second indication information to the terminal device. In this case, the second indication information can indicate at least one of: the CN side supporting processing the first identifier, or the CN side being capable of identifying the first identifier.

It can be noted that, if the first indication information is carried in a registration request message and the first identifier is not carried in the registration request message, the first identifier may be carried in any one of a registration update message, a session establishment request message, or a session modification request message. That is, in a registration process after the terminal device is powered on, the terminal device can send the first indication information to the CN side to indicate that the terminal device is capable of processing the first identifier, and the CN side can feed back the second indication information to the terminal device to indicate that the CN side supports or is capable of identifying the first identifier. After the terminal device receives the second indication information, the terminal device can report the first identifier in other processing processes, for example, may carry the first identifier in a registration update message in a registration update process, may carry the first identifier in a session establishment request message in a session establishment process, and/or may carry the first identifier in a session modification request message in a session modification process.

Optionally, the first indication information may be sent together with the first identifier. That is, the registration request message can carry both the first indication information and the first identifier.

In this case, the first network device can perform the various processing after the first network device receives the first identifier, which will not be repeated herein.

In this case, the first network device may not send the second indication information, or may send the second indication information. If the first network device sends the second indication information, a timing for sending the second indication information may be that the first network device sends the second indication information after obtaining the configuration information associated with the first identifier, or may be that the first network device sends the second indication information after determining that the second network device and/or the third network device at the CN side are capable of processing the first indication information, and all possible timing for sending the second indication information is not limited herein.

In some possible embodiments, the terminal device does not send the first indication information, but receives the second indication information. Correspondingly, the first network device does not receive the first indication information, but sends the second indication information.

In this embodiment, the second indication information may be carried in a registration accept message. This embodiment is applicable to a case where after the terminal device sends the registration request message, if the first network device determines that the network side has the second network device and/or the third network device that are capable of processing the first identifier, the first network device can actively send the second indication information to the terminal device. In this case, the second indication information can indicate that the network side requests the terminal device to report the first identifier, where the network side may specifically be a CN side.

Further, the terminal device can send the first identifier after receiving the second indication information. In this case, the first identifier can be carried in any one of a registration update message, a session establishment request message, or a session modification request message.

In the embodiment in which the first identifier is carried in the registration request message and/or the registration update message and in the embodiment in which the terminal device sends the first indication information to and/or receives the second indication information from the first network device, the first network device can be an AMF, the second network device can be a PCF, and the third network device can be a UDM. It can be understood that, the specific network elements of the first network device, the second network device, and the third network device are only exemplary illustrations. In actual processing, they may be replaced with other possible CN network elements, or functions of the first network device, the second network device, and/or the third network device may be combined in one CN network element, that is, the first network device can obtain the configuration information associated with the first identifier without interacting with other CN network elements. All possible examples are not exhaustively listed herein, and as long as the first network device, the second network device, and the third network device can implement the foregoing function, it falls within the protection scope of embodiments of the present disclosure.

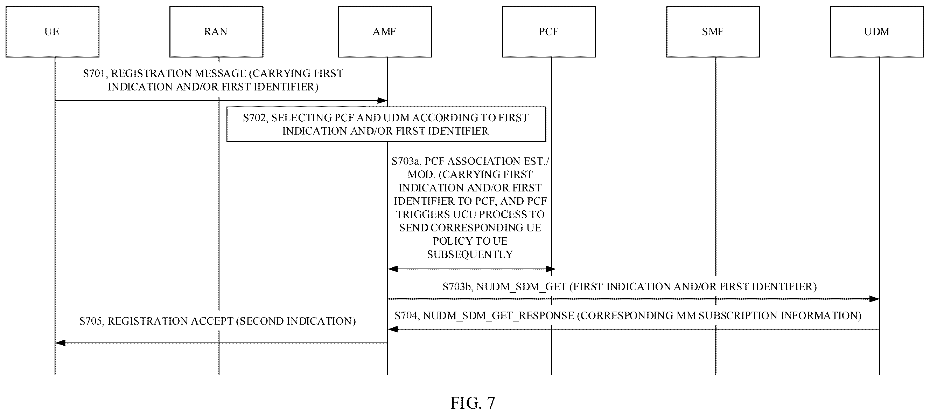

With reference to FIG. 7, the processing of the first identifier carried in the registration request message in the foregoing embodiment is exemplified with an example that the terminal device is a UE, the first network device is an AMF, the second network device is a PCF, and the third network device is a UDM. In the example of FIG. 7, the first indication information is referred to as "first indication" for short, that is, FIG. 7 illustrates a registration process based on "a first indication" and/or "a first identifier". When the UE initiates a registration process to the network for the first time, a main purpose of the UE sending the first indication and/or the first identifier (e. g., user identifier) to the AMF in the registration process is to obtain a UE policy corresponding to the user identifier and subscription information related to access and mobility management. The UE may report the first indication and/or the first identifier in an initial registration process when the UE is powered on, or may report the first indication/the first identifier after the initial registration is completed (e.g., when a user using the UE changes).

At S701, the UE adds the first indication and/or the first identifier into a registration request, where the first indication indicates that the UE supports reporting the first identifier. The first identifier in this operation refers to a first identifier of the UE.

At S701, the UE can still report an existing UE ID (e.g., an SUPI or an IMSI) and a network slice identifier (an S-NSSAI) to obtain policy information, subscription information of the UE under the existing mechanism. In addition, at S701, only the first indication can be sent, and when a registration response message confirms that the network supports processing or is allowed to process the first identifier (i.e., second indication information, or referred to as "second indication" for short, is obtained), the UE can report the first identifier in a subsequent registration process (or a registration update process) or a PDU session establishment/update process.

Then, the AMF can perform operations at S702 to S704, and the specific description is as follows.

The operations at S702 can include the following. The AMF determines a PCF and a UDM to be interacted with according to the first indication and/or the first identifier, respectively. In other words, after the AMF receives the first indication and/or the first identifier of S701, the AMF selects the PCF and/or the UDM according to the first indication and/or the first identifier.

If only "the first indication" but not "the first identifier" is carried at S701, after the operations at S702 is completed, only the UDM is required to send information related to "whether to support processing the first identifier" to the AMF, and based on this, the AMF generates a second indication for S705 and then performs operations at S705.

If "the first identifier" is carried at S701, at S702, the AMF determines the PCF and/or the UDM to be interacted with according to "the first identifier" (or the first identifier of the UE and the first indication). At S703a, the AMF sends the first identifier of the UE (and/or the first indication) to the PCF, where the first identifier of the UE and/or the first indication can be carried in a PCF association establishment/modification (PCF association est./mod.) message as illustrated in FIG. 7, and the PCF can trigger, according to the first identifier of the UE, a UCU process to send a corresponding UE policy to the UE. At S703b, the AMF sends the first identifier of the UE (or the first identifier of the UE and the first indication) to the UDM. As illustrated in FIG. 7, the first identifier and the first indication can be carried in an Nudm_SDM (subscriber data management)_Get. At S704, the UDM can reply a corresponding access and mobility management subscription information to the AMF. As illustrated in FIG. 7, a corresponding mobility management (MM) subscription information can be carried in an Nudm_SDM_Get_response (FIG. 7 only illustrates MM subscription information for the sake of brevity, and actually, the Nudm_SDM_Get_response can carry the access and mobility management subscription information).

It can be noted that, the UE policy is configured by the PCF to the UE in another separate process (a UE configuration update), which is not illustrated in signaling of the registration process. In addition, the UE policy or the subscription information sent by the PCF or the UDM may refer to content corresponding to a value of the current "first identifier" (i.e., a UE policy associated with the first identifier of the UE, or subscription information associated with the first identifier of the UE). Alternatively, the PCF or the UDM may send an association relationship (e.g., the first association relationship, the second association relationship, etc., which are described in the foregoing embodiment and will not be repeated).

In addition, the operations at S703a and the operations at S703b may be in no particular order. The operations at S704 are performed after the operations at S703b, that is, the operations at S704 may not be performed after the operations at S703a are completed.

At S705, the AMF carries a second indication in the registration response message, where the second indication indicates to the UE that a network side supports identifying the first identifier, and/or that the network side supports (or allows, or requires) the UE reporting the first identifier. The registration response message can also be a registration accept message illustrated in FIG. 7. The operations at S705 may be performed directly after the operations at S702, or may be performed after the operations at S703a and/or the operations at S704, which is not limited herein.

It can be noted that, FIG. 7 also illustrates other network devices, such as an SMF, an RAN. The SMF is a device at the CN side and is illustrated in FIG. 7 for the sake of completeness of the architecture, and a function of the SMF in the example of FIG. 7 is not limited herein. The RAN may be an AN device serving the UE, and a function of the RAN in the example of FIG. 7 is not limited herein.

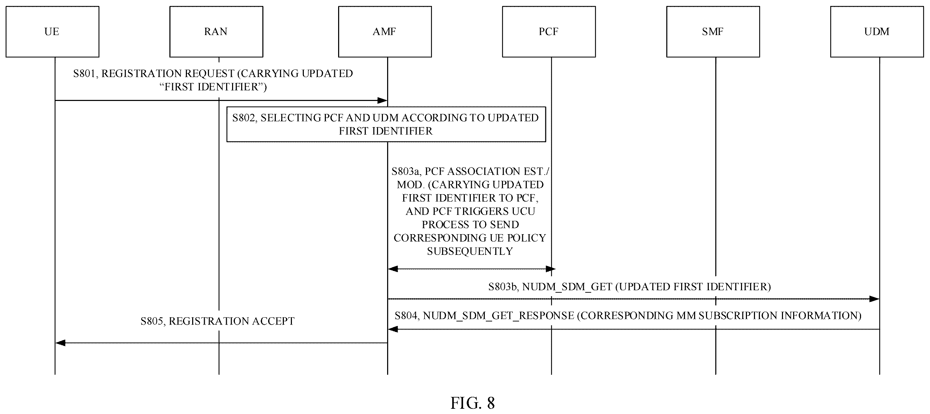

With reference to FIG. 8, the processing of the first identifier carried in the registration update message in the foregoing embodiment is exemplified with an example that the terminal device is a UE, the first network device is an AMF, the second network device is a PCF, and the third network device is a UDM. The example of FIG. 8 is mainly a registration process (or a registration update process) based on a value of an updated "first identifier". When a terminal does not carry "the first identifier" (i.e., only the "first indication" is carried in the registration request message in the example of FIG. 7) in an initial registration process or a user using the UE or an application/a service running on the UE changes (i.e., a first identifier of the UE changes), the UE performs a registration process (not an initial registration process) to change one or more CN network elements (e.g., a PCF) serving the UE, and to obtain access and mobility management subscription information and an update of a UE policy.

At S801, the UE sends a value of the (updated) "first identifier" (i.e., the first identifier of the UE or the updated first identifier of the UE) via a registration request. If the first identifier (the value of the first identifier, i.e., the first identifier of the UE) is updated (not an initial first identifier), the AMF can reselect a PCF and/or a UDM based on the updated first identifier. The registration request in this operation can be a registration update message.

It can be noted that, if the first identifier of the UE is not carried with the first indication in the example of FIG. 7, the registration request carries the first identifier of the UE for the first time, otherwise, the registration request carries the updated first identifier (i.e., the value of the updated first identifier of the UE).

At S802 to S804, the (updated) first identifier (i.e., the first identifier of the UE or the updated first identifier of the UE) is sent to the PCF and/or the UDM, and the PCF and/or the UDM knows, based on the (updated) first identifier, whether the value of the first identifier is changed. If the PCF and the UDM do not provide an "association relationship" in the example of FIG. 7, content corresponding to the value of the updated first identifier is sent to a peer end in this process.

For example, the operations at S802 can include the following. The AMF determines a PCF and a UDM to be interacted with according to the first identifier (i.e., the first identifier of the UE or the updated first identifier of the UE), respectively. At S803a, the AMF sends the first identifier of the UE to the PCF. For example, as illustrated in FIG. 8, a PCF association est./mod. message carrying the updated first identifier (i.e., the updated first identifier of the UE) is sent to the PCF, and the PCF can trigger, according to the first identifier of the UE, a UCU process to send a corresponding UE policy to the UE. At S803b, the AMF sends the first identifier to the UDM. As illustrated in FIG. 8, the updated first identifier (i.e., the updated first identifier of the UE) can be carried in an Nudm_SDM_Get message. At S804, the UDM can reply a corresponding access and mobility management subscription information to the AMF. As illustrated in FIG. 8, a corresponding MM subscription information can be carried in an Nudm_SDM_Get_response (FIG. 8 only illustrates MM subscription information for the sake of brevity, and actually, the Nudm_SDM_Get_response can carry the access and mobility management subscription information).

It can also be noted that, if the AMF has obtained the second association relationship in the example of FIG. 7, the AMF can directly select subscription information associated with the updated first identifier and send it to the UE.

At S805, the AMF sends a registration response message to the UE. The registration response message can also be a registration accept message illustrated in FIG. 8. It can be noted that, FIG. 8 also illustrates other network devices, such as an SMF, an RAN. The SMF is a device at the CN side and is illustrated in FIG. 8 for the sake of completeness of the architecture, and functions of the SMF and the RAN are not limited herein.

In some possible embodiments, the first identifier may be carried in a session establishment request message and/or a session modification request message.

It can be noted that, the session establishment request message and/or the session modification request message can further carry, in addition to the first identifier, other information as specified in the related protocol, which will not be exhaustively listed herein.

It can also be noted that, the session establishment request may carry the first identifier for the first time, or the session establishment request may carry the first identifier again after the registration request message and/or the registration update message carry the first identifier. For example, after the first identifier is carried in the registration request message, if the first identifier is carried again in the session establishment request, the first identifier carried in the registration request message can have a different value from the first identifier carried in the session establishment request. Similarly, the session modification request message may carry the first identifier for the first time, or the session modification request message may carry the first identifier again after the registration request message and/or the registration update message and/or the session establishment request message carry the first identifier. For example, after the first identifier is carried in the session establishment request message, if the first identifier is carried again in the session modification request message, the first identifier carried in the session modification request message has a different value than the first identifier carried in the session establishment request message.

After the first network device receives the first identifier, the method further includes at least one of the following. The first network device obtains a policy rule associated with the first identifier from the second network device. The first network device obtains subscription information associated with the first identifier from the third network device. The first network device determines, based on the second association relationship, the subscription information associated with the first identifier. The first network device determines, based on the third association relationship, the policy rule associated with the first identifier.

Different from the foregoing embodiment, in this embodiment, the first network device may not directly receive the first identifier sent by the terminal device, and the first network device may receive the first identifier sent by the terminal device via a fifth network device. That is, the fifth network device can be used to interact directly with the terminal device. Further, the fifth network device is used to forward a session establishment request message, and the first network device can be used to establish a context. The first network device can be selected by the fifth network device. For example, the fifth network device selects a first network device that can support or is capable of identifying the value of the first identifier.

In some possible examples, the first network device obtains the policy rule associated with the first identifier from the second network device as follows. The first network device sends the first identifier to the second network device, and receives the policy rule associated with the first identifier sent by the second network device.

For example, the first network device can send the first identifier to the second network device after receiving the first identifier. The second network device can determine, based on the third association relationship, the policy rule associated with the first identifier, and the second network device sends the policy rule associated with the first identifier to the first network device.

In some possible examples, the first network device determines, based on the third association relationship, the policy rule associated with the first identifier.

If the first network device performs processing based on the first identifier for the first time, the first network device can send the first identifier to the second network device, and receive the third association relationship and/or the first association relationship sent by the second network device. Then, the first network device can determine, based on the received third association relationship, the policy rule associated with the first identifier. For example, if the first identifier is carried in a session establishment request and the first network device receives the first identifier for the first time, the first network device can perform the above processing.

If the first network device does not perform processing based on the first identifier for the first time, the first network device may have stored the third association relationship, and the first network device can first detect whether the third association relationship is stored therein. If stored, the first network device directly determines, based on the third association relationship, the policy rule associated with the first identifier. If not stored, the first network device can send the first identifier to the second network device, receive the third association relationship sent by the second network device, and then determine, based on the received third association relationship, the policy rule associated with the first identifier. For example, if the previous first identifier is carried in a session establishment request and the previous first identifier is a first identifier received by the first network device for the first time, the first network device can obtain the third association relationship. If the first identifier carried in a session modification request message is received again in this case, the first network device can directly determine, based on the stored third association relationship, the policy rule associated with the first identifier.

In some possible examples, the first network device obtains the subscription information associated with the first identifier from the third network device as follows. The first network device sends the first identifier to the third network device, and receives the subscription information associated with the first identifier sent by the third network device.

For example, the first network device can send the first identifier to the third network device after receiving the first identifier. The third network device can determine, based on the second association relationship, the subscription information associated with the first identifier, and the third network device sends the subscription information associated with the first identifier to the first network device.

In some possible examples, the first network device determines, based on the second association relationship, the subscription information associated with the first identifier.

If the first network device performs processing based on the first identifier for the first time, the first network device can send the first identifier to the second network device, and the first network device sends the first identifier to the third network device, and receives the second association relationship sent by the third network device. Then, the first network device can determine, based on the received second association relationship, the subscription information associated with the first identifier.

If the first network device does not perform processing based on the first identifier for the first time, the first network device may have stored the second association relationship, and the first network device can first detect whether the second association relationship is stored therein. If stored, the first network device directly determines, based on the second association relationship, the subscription information associated with the first identifier. If not stored, the first network device can send the first identifier to the third network device, receive the second association relationship sent by the third network device, and then determine, based on the received second association relationship, the subscription information associated with the first identifier.

It can also be noted that, in this embodiment, the subscription information associated with the first identifier can at least include a session management subscription (or session management subscription information) associated with the first identifier.

Further, in the processing of the first network device, the method further includes at least one of the following. The first network device determines a QoS rule associated with the first identifier based on the subscription information associated with the first identifier and/or the policy rule associated with the first identifier. The first network device determines a QoS parameter associated with the first identifier based on the subscription information associated with the first identifier and/or the policy rule associated with the first identifier. The first network device determines a PDR associated with the first identifier based on the subscription information associated with the first identifier and/or the policy rule associated with the first identifier.

The method further includes at least one of the following. The first network device sends the QoS rule associated with the first identifier to the terminal device. The first network device sends the QoS parameter associated with the first identifier to an AN device, where the AN device serves the terminal device. The first network device sends the PDR associated with the first identifier to a fourth network device. The AN device serving the terminal device may be a fourth AN device, that is, the fourth AN device serves the terminal device, and the fourth AN device may be the same as or different from the first AN device, the second AN device, and the third AN device, which is not limited in embodiments of the present disclosure.

Correspondingly, after the terminal device sends the first identifier, the method further includes the following. The terminal device receives the QoS rule associated with the first identifier, where the QoS rule associated with the first identifier is determined based on the subscription information associated with the first identifier and/or the policy rule associated with the first identifier.

In this embodiment, the specific processing of the first network device determining at least one of the QoS rule, the QoS parameter, or the PDR associated with the first identifier is not limited herein. It can be noted that, at least one of the QoS rule, the PDR, or the QOS parameter can be used for implementing at least one of: controlling the type of data to be transmitted, controlling the content of an application that can be accessed, controlling the type of data that can be accessed, adjusting or controlling the transmission quality of service data, etc. In the solutions provided in embodiments of the present disclosure, at least one of a different QoS rule, a different QoS parameter, or a different PDR can be determined with a different value of the first identifier. In this way, with the difference in at least one of the user, the service, or the application, the same terminal device can more accurately control the type of data to be transmitted, control the content of the application that can be accessed, control the type of data that can be accessed, and/or adjust or control the transmission quality of service data. For example, a different value of the first identifier indicates a different user using the terminal device. When different users use the same terminal device, due to the different value of the first identifier, at least one of the QoS rule associated with the first identifier or the PDR associated with the first identifier becomes different, such that the content of the application accessible to different users using the terminal device is different. For example, when children log into the terminal device, it is necessary to restrict access to content suitable for children (such as websites and/or applications appropriate for children, etc.). With the solutions provided in embodiments of the present disclosure, which types of data flows to be transmitted can be controlled through the QoS rule associated with the first identifier (which indicates that the children use the terminal device) and the PDR associated with the first identifier. In this way, the desired effect can be achieved. For another example, when different users log into the same terminal device, some of them may have subscribed to high-definition video services due to different requirements for service bandwidth. In this case, when these users log into the terminal device, the network needs to provide a higher QoS parameter to enable the transmission of high-definition service data.

The first network device sends the QoS parameter associated with the first identifier to the AN device, which can mean that the first network device sends the QoS parameter associated with the first identifier to the AN device via the fifth network device, or that the first network device directly sends the QoS parameter associated with the first identifier to the AN device.

The first network device sends the PDR associated with the first identifier to the fourth network device, which can mean that the first network device sends the PDR associated with the first identifier to the fourth network device via the fifth network device, or that the first network device directly sends the PDR associated with the first identifier to the fourth network device.

The first network device sends the QoS rule associated with the first identifier to the terminal device as follows. The first network device sends the QoS rule associated with the first identifier to the terminal device via the fifth network device. Further, the first network device sends the QoS rule associated with the first identifier to the terminal device via the fifth network device as follows. The first network device sends the QoS rule associated with the first identifier to the terminal device via the fifth network device and the AN device, where the AN device serves the terminal device.

In the embodiment in which the first identifier is carried in the session establishment request message and/or the session modification request message, the first network device can be an SMF, the second network device can be a PCF, and the third network device can be a UDM. It can also be understood that, the specific network elements of the first network device, the second network device, and the third network device in the foregoing are exemplary illustrations. In actual processing, as long as the network device is capable of implementing the various functions, it falls within the protection scope of embodiments of the present disclosure, and possible network devices are not exhaustively listed herein. In addition, the fourth network device can be a UPF, and the fifth network device can be an AMF.

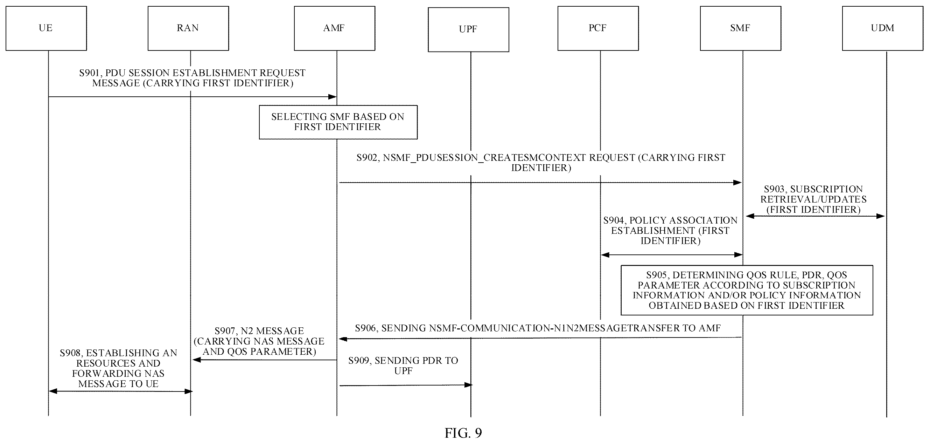

With reference to FIG. 9, the processing of the first identifier carried in the session establishment request message in the foregoing embodiment is exemplified with an example that the terminal device is a UE, the first network device is an SMF, the second network device is a PCF, the third network device is a UDM, the fourth network device is a UPF, and the fifth network device is an AMF. The example in FIG. 9 illustrates a PDU session establishment process based on "a first identifier". In the PDU session establishment process, it is necessary to consider who the specific user of the UE is, i.e., the value of "the first identifier". The UE reports the first identifier, such that a CN network element (such as an SMF) can obtain corresponding subscription information and policy information, thereby establishing a QoS flow with a specific QoS parameter and a binding rule of the QoS flow.

At S901, the UE carries a first identifier of the UE in a PDU session establishment request message, and the AMF determines a selection of an SMF based on the first identifier of the UE. The PDU session establishment request message can be a session establishment request message in the foregoing embodiment.

The operations at S902 to S904 include the following.

At S902, the AMF sends request information about PDU session establishment and the first identifier to the SMF via an N11 interface message. As illustrated in FIG. 9, at S902, the first identifier can be carried in an Nsmf_PDUSession_CreateSMContext request message.

Then, the SMF interacts with the UDM and/or the PCF based on the first identifier, and the interaction includes the following.

At S903 and S904, the SMF selects the UDM and/or the PCF for interaction based on the first identifier. During the interaction, the SMF carries the first identifier to inform the UDM and/or the PCF, to obtain subscription information and/or policy information corresponding to the first identifier. As illustrated in FIG. 9, an interaction between the SMF and the UDM is denoted as S903, an interaction between the SMF and the PCF is denoted as S904, and in actual processing, the operations at S903 and the operations at S904 may be in no particular order. As illustrated in FIG. 9, a process used in the interaction between the SMF and the UDM at S903 is illustrated as a subscription retrieval/updates process, in which any signaling sent from the SMF to the UDM carries the first identifier. As illustrated in FIG. 9, a process used in the interaction between the SMF and the PCF at S904 is illustrated as a policy association establishment process, in which any signaling sent from the SMF to the PCF carries the first identifier.

The subscription information and/or the policy information sent by the UDM and the PCF may be subscription information and/or policy information corresponding to the first identifier of the UE. Alternatively, the subscription information and/or the policy information sent by the UDM and the PCF may be a list of information corresponding to different values of the first identifier, i.e., the third association relationship and the second association relationship. As such, when (a value of) the first identifier of the UE is changed subsequently, after the UE reports (a value of) an updated first identifier through a PDU session modification, the SMF can directly search out new corresponding subscription information and/or policy information parameters based on the third association relationship and the second association relationship. Each second identifier in the second association relationship is referred to as a value of the second identifier value (i.e., various values of the first type of identifier), subscription information in the second association relationship is referred to as a value of a subscription information parameter, and the second association relationship can be as illustrated in Table 1:

**Table 1**

| Values of the second identifier | Values of the subscription information parameter |
|---|---|
| 1 | subscription information parameter-1 |
| 2 | subscription information parameter-2 |
| .... | .... |

As can be seen from Table 1, the value of the second identifier being 1 is associated with subscription information-1 (i.e., subscription information parameter-1), the value of the second identifier being 2 is associated with subscription information-2 (i.e., subscription information parameter-2), which will not be listed one by one.

Each second identifier in the third association relationship is referred to as a value of the second identifier value (i.e., various values of the first type of identifier), a policy rule in the third association relationship is referred to as a value of a policy information parameter, and the third association relationship can be as illustrated in Table 2:

**Table 2**

| Values of the second identifier | Values of the policy information parameter |
|---|---|
| 1 | policy information parameter-1 |
| 2 | policy information parameter-2 |
| .... | .... |

As can be seen from Table 2, the value of the second identifier being 1 is associated with policy information-1 (i.e., policy information parameter-1), the value of the second identifier being 2 is associated with policy information-2 (i.e., policy information parameter-2), which will not be listed one by one.

At 905 to S907, according to the obtained subscription information and/or the obtained policy information, the SMF determines a PCC rule, generates a QoS rule, a PDR, and a QoS parameter corresponding to the QoS flow, and then sends them to the corresponding UE, RAN, and UPF for execution.

Specifically, at S905, the SMF determines the QoS rule, the PDR, and the QoS parameter according to the subscription information and/or the policy information obtained based on the first identifier. For example, according to the subscription information and/or the policy information obtained based on the first identifier, the SMF determines the PCC rule and generates the QoS rule, the PDR, and the QoS parameter corresponding to the QoS flow.

At S906, the SMF sends an Namf-communication-N1N2MessageTransfer to the AMF. Specifically, the Namf-communication-N1N2MessageTransfer can carry the QoS rule, the PDR, and the QoS parameter (i.e., the QoS rule, the PDR, and the QoS parameter associated with the first identifier).

At S907, the AMF sends the QoS parameter (i.e., the QoS parameter associated with the first identifier of the UE) to the RAN via an N2 message (which can carry an NAS message, the QoS parameter, etc.).

At S908, the RAN establishes AN resources and forwards the NAS message to the UE. The NAS message at S907 and S908 can carry the QoS rule (i.e., the QoS rule associated with the first identifier of the UE).

In addition, operations at S909 can further be included. The AMF can also send the PDR to the UPF. The operations at S909 and the operations at S907 may be in no particular order.

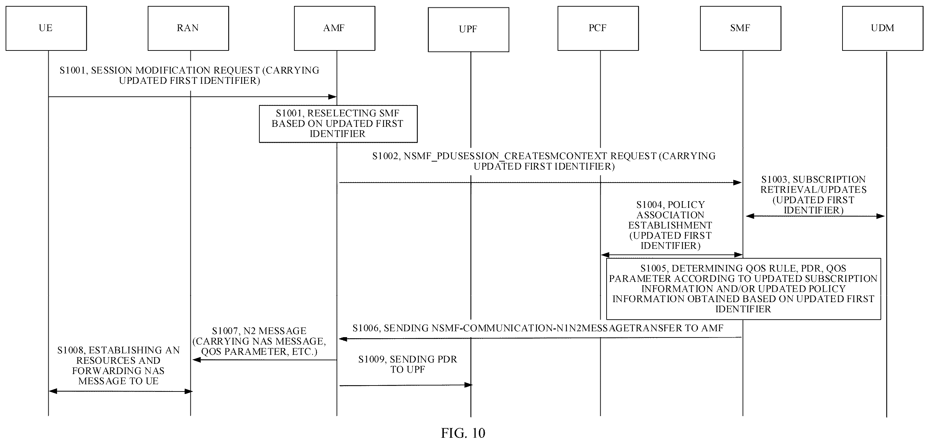

With reference to FIG. 10, the processing of the first identifier carried in the session establishment request message in the foregoing embodiment is exemplified with an example that the terminal device is a UE, the first network device is an SMF, the second network device is a PCF, the third network device is a UDM, the fourth network device is a UPF, and the fifth network device is an AMF. The example in FIG. 10 illustrates a PDU session modification based on "a first identifier". The PDU session modification can be used when a user using the UE changes or an application/service running on the UE changes, i.e., a value of a corresponding "first identifier" also changes. In this case, the PDU session modification process can be used for modifying related parameters. Due to the change of the user, it may be necessary to reselect an SMF and interact with the UDM and the PCF again, to obtain new subscription information and policy information. If policy information or subscription information corresponding to a different value of the first identifier is obtained in the PDU session establishment process, an interaction with the UDM and PCF is not required.

S1001, when a user using the same UE changes or the first identifier (i.e., the value of the first identifier) changes due to other reasons, the UE can send a PDU session modification request to the AMF. In this case, the AMF can reselect an SMF based on the updated first identifier (i.e., the updated first identifier) (such a reselection is not supported in the existing process).

At S1002, a request message sent by the AMF to the SMF carries the updated first identifier. The request message can specifically be an Nsmf_PDUSession_UpdateSMContext request illustrated in FIG. 10.

At S1003 to S1004 (optional), the SMF determines, according to the updated first identifier, whether the PCF and/or the UDM needs to be changed, and interacts with the PCF and the UDM to obtain new policy information and/or subscription information (i.e., policy information and/or subscription information associated with the updated first identifier of the UE). If the UDM and the PCF send Table 1 or Table 2 to the SMF in FIG. 9, the operations at S1003 to S1004 can be skipped. The specific descriptions of S1003 and S1004 are the same as those of S903 and S904 in the foregoing example, which will not be repeated.

At S1005 to S1009, the SMF determines a QoS parameter, a QoS rule, and a PDR (that is, the QoS rule, the PDR, and the QoS parameter associated with the first identifier of the UE) based on updated subscription information and updated policy information obtained based on the updated first identifier, and sends them to the corresponding UE, RAN, and UPF for execution. Specifically, according to the updated subscription information and/or the updated policy information, the SMF determines the PCC rule, generates the QoS rule, the PDR, and the QoS parameter corresponding to the QoS flow, and then sends them to the corresponding UE, RAN, and UPF for execution.

The specific descriptions of S1005 to S1009 are the same as those of S905 to S909 in FIG. 9, which will not be repeated herein.

As can be seen, with the solutions provided in embodiments of the present disclosure, the terminal device can send the first identifier, where the first identifier indicates the information related to the terminal device, and the information related to the terminal device includes at least one of: the information of the user using the terminal device, the information of the application and/or the service running on the terminal device, etc. As such, the configuration information associated with the first identifier can be obtained based on the first identifier. In this way, the network side is enabled to determine the configuration information associated with the terminal device based on user and/or service and/or application-related information of the terminal device, which can avoid a problem in the related art that corresponding configuration information cannot be adjusted or determined flexibly and accurately in combination with finer granularity (or dimension), such as different users and/or different applications and/or different services.

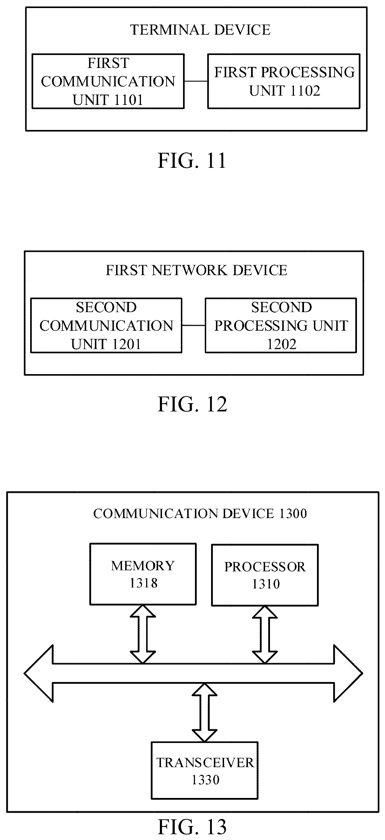

FIG. 11 is a schematic structural diagram of a composition of a terminal device according to an embodiment of the present disclosure. The terminal device includes a first communication unit 1101. The first communication unit 1101 is configured to send a first identifier. The first identifier indicates information related to the terminal device. The information related to the terminal device includes at least one of: information of a user using the terminal device, information of an application running on the terminal device, or information of a service running on the terminal device. The first identifier is used for determining configuration information associated with the first identifier.

The information of the user using the terminal device includes at least one of: an identifier of the user using the terminal device, or biometric information of the user using the terminal device.

The configuration information associated with the first identifier includes at least one of: a UE policy associated with the first identifier, subscription information associated with the first identifier, a policy rule associated with the first identifier, or one or more electronic devices associated with the first identifier.

As illustrated in the schematic structural diagram of the composition of the terminal device in FIG. 11, the terminal device further includes a first processing unit 1102. The first processing unit 1102 is configured to determine, based on a first association relationship, a UE policy associated with the first identifier, where the first association relationship includes a UE policy associated with each of one or more second identifiers. Alternatively, the first communication unit is configured to receive the UE policy associated with the first identifier after sending the first identifier.

The first communication unit is configured to receive the first association relationship.

The first communication unit is configured to receive a QoS rule associated with the first identifier, where the QoS rule associated with the first identifier is determined based on the subscription information associated with the first identifier and/or the policy rule associated with the first identifier.

The first identifier is carried in at least one of: a registration request message, a registration update message, a session establishment request message, or a session modification request message.

The first communication unit is configured to send first indication information, where the first indication information indicates at least one of: the terminal device supporting reporting the first identifier, the terminal device being capable of identifying the first identifier, or the terminal device being capable of processing the first identifier.

The first communication unit is configured to receive second indication information, where the second indication information indicates at least one of: a network side supporting processing the first identifier, the network side being capable of identifying the first identifier, the network side requesting the terminal device to report the first identifier, the network side requiring the terminal device to report the first identifier, or the network side allowing the terminal device to report the first identifier.

The first indication information is carried in a registration request message.

The second indication information is carried in a registration accept message.

FIG. 12 is a schematic structural diagram of a composition of a first network device according to an embodiment of the present disclosure. The first network device includes a second communication unit 1201. The second communication unit 1201 is configured to receive a first identifier, where the first identifier indicates information related to a terminal device, the information related to the terminal device includes at least one of: information of a user using the terminal device, information of an application running on the terminal device, or information of a service running on the terminal device, and the first identifier is used for determining configuration information associated with the first identifier.

The information of the user using the terminal device includes at least one of: an identifier of the user using the terminal device, or biometric information of the user using the terminal device.

The configuration information associated with the first identifier includes at least one of: a UE policy associated with the first identifier, subscription information associated with the first identifier, a policy rule associated with the first identifier, or other terminals associated with the first identifier.

As illustrated in the schematic structural diagram of the composition of the first network device in FIG. 12, the first network device further includes a second processing unit 1202. The second processing unit 1202 is configured to perform at least one of the following. The second processing unit 1202 is configured to determine, based on a second association relationship, subscription information associated with the first identifier, where the second association relationship includes subscription information associated with each of one or more second identifiers. The second processing unit 1202 is configured to determine, based on a third association relationship, a policy rule associated with the first identifier, where the third association relationship includes a policy rule associated with each of the one or more second identifiers. The second processing unit 1202 is configured to determine, based on a first association relationship, a UE policy associated with the first identifier, where the first association relationship includes a UE policy associated with each of the one or more second identifiers. Additionally/alternatively, the second communication unit is configured to perform at least one of the following. The second communication unit is configured to send the first identifier to a second network device, where the first identifier is used by the second network device to determine the UE policy associated with the first identifier. The second communication unit is configured to obtain the policy rule associated with the first identifier from the second network device. The second communication unit is configured to obtain the subscription information associated with the first identifier from a third network device. The second communication unit is configured to obtain the UE policy associated with the first identifier from the second network device.

The second communication unit is configured to send the first identifier to the second network device, and receive the policy rule associated with the first identifier sent by the second network device.

The second communication unit is configured to send the first identifier to the third network device, and receive the subscription information associated with the first identifier sent by the third network device.

The second communication unit is configured to perform at least one of the following. The second communication unit is configured to send the first identifier to the third network device, and receive the second association relationship sent by the third network device. The second communication unit is configured to send the first identifier to the second network device, and receive the third association relationship and/or the first association relationship sent by the second network device.

The second processing unit is configured to perform at least one of the following. The second processing unit is configured to determine a QoS rule associated with the first identifier based on subscription information associated with the first identifier and/or a policy rule associated with the first identifier. The second processing unit is configured to determine a QoS parameter associated with the first identifier based on the subscription information associated with the first identifier and/or the policy rule associated with the first identifier. The second processing unit is configured to determine a PDR associated with the first identifier based on the subscription information associated with the first identifier and/or the policy rule associated with the first identifier.

The second communication unit is configured to perform at least one of the following. The second communication unit is configured to send the QoS rule associated with the first identifier to the terminal device. The second communication unit is configured to send the QoS parameter associated with the first identifier to an AN device, where the AN device serves the terminal device. The second communication unit is configured to send the PDR associated with the first identifier to a fourth network device.

The second communication unit is configured to perform at least one of: sending the UE policy associated with the first identifier to the terminal device, or sending the first association relationship to the terminal device.

The first identifier is carried in at least one of: a registration request message, a registration update message, a session establishment request message, or a session modification request message.

The second communication unit is configured to receive first indication information sent by the terminal device, where the first indication information indicates at least one of: the terminal device supporting reporting the first identifier, the terminal device being capable of identifying the first identifier, or the terminal device being capable of processing the first identifier.

The second communication unit is configured to send second indication information to the terminal device, where the second indication information indicates at least one of: a network side supporting processing the first identifier, the network side being capable of identifying the first identifier, the network side requesting the terminal device to report the first identifier, the network side requiring the terminal device to report the first identifier, or the network side allowing the terminal device to report the first identifier.

The first indication information is carried in a registration request message.

The second indication information is carried in a registration accept message.

The fourth network device is a UPF.

The second network device is a PCF, and the third network device is a UDM.

The first network device is an AMF or an SMF.

The device in embodiments of the present disclosure can implement the corresponding functions of various devices in embodiments of the communication method. For the procedure, function, implementation, and advantage corresponding to each module (sub-module, unit, or assembly, etc.) in the terminal device or the first network device, reference can be made to the corresponding illustrations in the foregoing method embodiments, which will not be repeated herein. It should be noted that, the functions of various modules (sub-modules, units, or assemblies, etc.) in the terminal device or the first network device in embodiments of the present disclosure may be implemented by different modules (sub-modules, units, or assemblies, etc.), or may be implemented by the same module (sub-module, unit, or assembly, etc.).

FIG. 13 is a schematic structural diagram of a communication device 1300 according to embodiments of the present disclosure. The communication device 1300 includes a processor 1310, where the processor 1310 can invoke and execute a computer program stored in a memory, to cause the communication device 1300 to implement the method in embodiments of the present disclosure. In a possible embodiment, the communication device 1300 may further include a memory 1320. The processor 1310 can invoke and execute a computer program stored in the memory 1320, to cause the communication device 1300 to implement the method in embodiments of the present disclosure. The memory 1320 may be a separate device independent of the processor 1310, or may be integrated into the processor 1310. In a possible embodiment, the communication device 1300 may further include a transceiver 1330. The processor 1310 may control the transceiver 1330 to communicate with other devices. Specifically, the processor 1310 may control the transceiver 1330 to send information or data to, or receive information or data from, other devices. The transceiver 1330 may include a transmitter and a receiver. The transceiver 1330 may further include one or more antennas.

In a possible embodiment, the communication device 1300 may be the terminal device in embodiments of the present disclosure, and the communication device 1300 may implement corresponding operations implemented by the terminal device in various methods in embodiments of the present disclosure, which will not be repeated herein for the sake of brevity. In a possible embodiment, the communication device 1300 may be the first network device in embodiments of the present disclosure, and the communication device 1300 may implement corresponding operations implemented by the first network device in various methods in embodiments of the present disclosure, which will not be repeated herein for the sake of brevity.

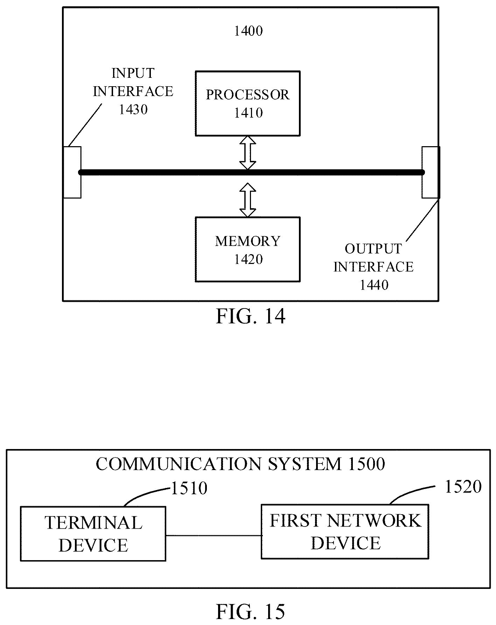

FIG. 14 is a schematic structural diagram of a chip according to embodiments of the present disclosure. The chip 1400 includes a processor 1410, where the processor 1410 can invoke and execute a computer program stored in a memory to implement the method in embodiments of the present disclosure. In a possible embodiment, the chip 1400 may further include a memory 1420. The processor 1410 can invoke and execute a computer program stored in the memory 1420, to implement the method performed by the first device or the target second device in embodiments of the present disclosure. The memory 1420 may be a separate device independent of the processor 1410, or may be integrated into the processor 1410. In a possible embodiment, the chip 1400 may further include an input interface 1430. The processor 1410 may control the input interface 1430 to communicate with other devices or chips. Specifically, the processor 1410 can obtain information or data sent by other devices or chips. In a possible embodiment, the chip 1400 may further include an output interface 1440. The processor 1410 may control the output interface 1440 to communicate with other devices or chips. Specifically, the processor 1410 may output information or data to other devices or chips.

In a possible embodiment, the chip is applicable to the terminal device in embodiments of the present disclosure, and the chip may implement the corresponding operations performed by the terminal device in various methods of embodiments of the present disclosure, which will not be repeated herein for the sake of brevity. In a possible embodiment, the chip is applicable to the first network device in embodiments of the present disclosure, and the chip may implement the corresponding operations performed by the first network device in various methods of embodiments of the present disclosure, which will not be repeated herein for the sake of brevity. It may be understood that, the chip in embodiments of the present disclosure may also be referred to as a system-level chip, a system chip, a chip system, or a system-on-chip (SOC). The processor may be a general-purpose processor, a digital signal processor (DSP), an application-specific integrated circuit (ASIC), a field programmable gate array (FPGA), or other programmable logic devices, discrete gates or transistor logic devices, or discrete hardware components. The methods, steps, and logic blocks disclosed in embodiments of the present disclosure can be implemented or executed. The general-purpose processor may be a microprocessor, any conventional processor, etc. The memory may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory can be a random access memory (RAM). It can be understood that, the memory is only an example but not a limitation description. For example, the memory in embodiments of the present disclosure may be a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), a direct rambus RAM (DR RAM), etc. It may be noted that, the memory in embodiments of the present disclosure is intended to include, but is not limited to, these and any other suitable types of memory.

FIG. 15 is a schematic block diagram of a communication system 1500 according to an embodiment of the present disclosure. The communication system 1500 includes a terminal device 1510 and a first network device 1520. The terminal device 1510 can be configured to implement the corresponding functions performed by the terminal device in the method. The first network device 1520 can be configured to implement the corresponding functions performed by the first network device in the method. For the sake of brevity, the details are not repeated herein.

All or some of the above embodiments can be implemented through software, hardware, firmware, or any other combination thereof. When implemented by software, all or some of the above embodiments can be implemented in the form of a computer program product. The computer program product includes one or more computer instructions. When the computer instructions are applied and executed on a computer, all or some of the operations or functions of embodiments of the present disclosure are performed. The computer can be a general-purpose computer, a special-purpose computer, a computer network, or other programmable apparatus. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device, such as a server, a data center, etc., which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

It can be understood that, in various method embodiments of the present disclosure, the magnitude of a sequence number of each of the foregoing processes does not mean an execution order, and an execution order of each process should be determined according to a function and an internal logic of the process, which shall not constitute any limitation to an implementation process of embodiments of the present disclosure. It will be evident to those skilled in the art that, for the sake of convenience and brevity, in terms of the specific working processes of the foregoing systems, apparatuses, and units, reference can be made to the corresponding processes in the foregoing method embodiments, which will not be repeated herein. The foregoing elaborations are merely implementations of the present disclosure, but are not intended to limit the protection scope of the present disclosure. Any variation or replacement easily thought of by those skilled in the art within the technical scope disclosed in the present disclosure shall belong to the protection scope of the present disclosure. Therefore, the protection scope of the present disclosure shall be subject to the protection scope of the claims.

## Claims

1. A communication method, comprising:
sending, by a terminal device, a first identifier, wherein the first identifier indicates information related to the terminal device, the information related to the terminal device comprises at least one of: information of a user using the terminal device, information of an application running on the terminal device, or information of a service running on the terminal device, and the first identifier is used for determining configuration information associated with the first identifier.

2. The method of claim 1, wherein the information of the user using the terminal device comprises at least one of: an identifier of the user using the terminal device, or biometric information of the user using the terminal device.

3. The method of claim 1 or 2, wherein the configuration information associated with the first identifier comprises at least one of:
a user equipment (UE) policy associated with the first identifier;
subscription information associated with the first identifier;
a policy rule associated with the first identifier; or
one or more electronic devices associated with the first identifier.

4. The method of any one of claims 1 to 3, wherein after sending, by the terminal device, the first identifier, the method further comprises one of:
receiving, by the terminal device, a UE policy associated with the first identifier; or
determining, by the terminal device based on a first association relationship, the UE policy associated with the first identifier, wherein the first association relationship comprises a UE policy associated with each of one or more second identifiers.

5. The method of claim 4, wherein before determining, by the terminal device based on the first association relationship, the UE policy associated with the first identifier, the method further comprises:
receiving, by the terminal device, the first association relationship.

6. The method of any one of claims 1 to 5, wherein after sending, by the terminal device, the first identifier, the method further comprises:
receiving, by the terminal device, a quality of service (QoS) rule associated with the first identifier, wherein the QoS rule associated with the first identifier is determined based on subscription information associated with the first identifier and/or a policy rule associated with the first identifier.

7. The method of any one of claims 1 to 6, wherein the first identifier is carried in at least one of: a registration request message, a registration update message, a session establishment request message, or a session modification request message.

8. The method of any one of claims 1 to 7, further comprising:
sending, by the terminal device, first indication information, wherein the first indication information indicates at least one of: the terminal device supporting reporting the first identifier, the terminal device being capable of identifying the first identifier, or the terminal device being capable of processing the first identifier.

9. The method of any one of claims 1 to 8, further comprising:
receiving, by the terminal device, second indication information, wherein the second indication information indicates at least one of: a network side supporting processing the first identifier, the network side being capable of identifying the first identifier, the network side requesting the terminal device to report the first identifier, the network side requiring the terminal device to report the first identifier, or the network side allowing the terminal device to report the first identifier.

10. The method of claim 8, wherein the first indication information is carried in a registration request message.

11. The method of claim 9, wherein the second indication information is carried in a registration accept message.

12. A communication method, comprising:
receiving, by a first network device, a first identifier, wherein the first identifier indicates information related to a terminal device, the information related to the terminal device comprises at least one of: information of a user using the terminal device, information of an application running on the terminal device, or information of a service running on the terminal device, and the first identifier is used for determining configuration information associated with the first identifier.

13. The method of claim 12, wherein the information of the user using the terminal device comprises at least one of: an identifier of the user using the terminal device, or biometric information of the user using the terminal device.

14. The method of claim 12 or 13, wherein the configuration information associated with the first identifier comprises at least one of:
a user equipment (UE) policy associated with the first identifier;
subscription information associated with the first identifier;
a policy rule associated with the first identifier; or
other terminals associated with the first identifier.

15. The method of any one of claims 12 to 14, wherein after receiving, by the first network device, the first identifier, the method further comprises at least one of:
sending, by the first network device, the first identifier to a second network device, wherein the first identifier is used by the second network device to determine a UE policy associated with the first identifier;
obtaining, by the first network device, a policy rule associated with the first identifier from the second network device;
obtaining, by the first network device, subscription information associated with the first identifier from a third network device;
determining, by the first network device based on a second association relationship, the subscription information associated with the first identifier, wherein the second association relationship comprises subscription information associated with each of one or more second identifiers;
determining, by the first network device based on a third association relationship, the policy rule associated with the first identifier, wherein the third association relationship comprises a policy rule associated with each of the one or more second identifiers;
obtaining, by the first network device, the UE policy associated with the first identifier from the second network device; or
determining, by the first network device based on a first association relationship, the UE policy associated with the first identifier, wherein the first association relationship comprises a UE policy associated with each of the one or more second identifiers.

16. The method of claim 15, wherein obtaining, by the first network device, the policy rule associated with the first identifier from the second network device comprises:
sending, by the first network device, the first identifier to the second network device, and receiving, by the first network device, the policy rule associated with the first identifier sent by the second network device.

17. The method of claim 15, wherein obtaining, by the first network device, the subscription information associated with the first identifier from the third network device comprises:
sending, by the first network device, the first identifier to the third network device, and receiving, by the first network device, the subscription information associated with the first identifier sent by the third network device.

18. The method of claim 15, wherein the method further comprises at least one of:
sending, by the first network device, the first identifier to the third network device, and receiving, by the first network device, the second association relationship sent by the third network device; or
sending, by the first network device, the first identifier to the second network device, and receiving, by the first network device, the third association relationship and/or the first association relationship sent by the second network device.

19. The method of any one of claims 12 to 18, wherein the method further comprises at least one of:
determining, by the first network device, a quality of service (QoS) rule associated with the first identifier based on subscription information associated with the first identifier and/or a policy rule associated with the first identifier;
determining, by the first network device, a QoS parameter associated with the first identifier based on the subscription information associated with the first identifier and/or the policy rule associated with the first identifier; or
determining, by the first network device, a packet detection rule (PDR) associated with the first identifier based on the subscription information associated with the first identifier and/or the policy rule associated with the first identifier.

20. The method of claim 19, wherein the method further comprises at least one of:
sending, by the first network device, the QoS rule associated with the first identifier to the terminal device;
sending, by the first network device, the QoS parameter associated with the first identifier to an access network (AN) device, wherein the AN device serves the terminal device; or
sending, by the first network device, the PDR associated with the first identifier to a fourth network device.

21. The method of any one of claims 15 to 18, wherein the method further comprises one of:
sending, by the first network device, the UE policy associated with the first identifier to the terminal device; or
sending, by the first network device, the first association relationship to the terminal device.

22. The method of any one of claims 12 to 21, wherein the first identifier is carried in at least one of: a registration request message, a registration update message, a session establishment request message, or a session modification request message.

23. The method of any one of claims 12 to 22, further comprising:
receiving, by the first network device, first indication information sent by the terminal device, wherein the first indication information indicates at least one of: the terminal device supporting reporting the first identifier, the terminal device being capable of identifying the first identifier, or the terminal device being capable of processing the first identifier.

24. The method of any one of claims 12 to 23, further comprising:
sending, by the first network device, second indication information to the terminal device, wherein the second indication information indicates at least one of: a network side supporting processing the first identifier, the network side being capable of identifying the first identifier, the network side requesting the terminal device to report the first identifier, the network side requiring the terminal device to report the first identifier, or the network side allowing the terminal device to report the first identifier.

25. The method of claim 23, wherein the first indication information is carried in a registration request message.

26. The method of claim 24, wherein the second indication information is carried in a registration accept message.

27. The method of claim 20, wherein the fourth network device is a user plane function (UPF).

28. The method of any one of claims 15 to 21, wherein the second network device is a policy control function (PCF), and the third network device is a unified data management (UDM).

29. The method of any one of claims 12 to 28, wherein the first network device is an access and mobility management function (AMF) or a session management function (SMF).

30. A terminal device, comprising:
a first communication unit configured to send a first identifier, wherein the first identifier indicates information related to the terminal device, the information related to the terminal device comprises at least one of: information of a user using the terminal device, information of an application running on the terminal device, or information of a service running on the terminal device, and the first identifier is used for determining configuration information associated with the first identifier.

31. The terminal device of claim 30, wherein the information of the user using the terminal device comprises at least one of: an identifier of the user using the terminal device, or biometric information of the user using the terminal device.

32. The terminal device of claim 30 or 31, wherein the configuration information associated with the first identifier comprises at least one of: a user equipment (UE) policy associated with the first identifier; subscription information associated with the first identifier; a policy rule associated with the first identifier; or one or more electronic devices associated with the first identifier.

33. The terminal device of any one of claims 30 to 32, further comprising:
a first processing unit configured to determine, based on a first association relationship, a UE policy associated with the first identifier, wherein the first association relationship comprises a UE policy associated with each of one or more second identifiers; or
the first communication unit configured to receive the UE policy associated with the first identifier after sending the first identifier.

34. The terminal device of claim 33, wherein the first communication unit is configured to receive the first association relationship.

35. The terminal device of any one of claims 30 to 34, wherein the first communication unit is configured to receive a quality of service (QoS) rule associated with the first identifier, wherein the QoS rule associated with the first identifier is determined based on subscription information associated with the first identifier and/or a policy rule associated with the first identifier.

36. The terminal device of any one of claims 30 to 35, wherein the first identifier is carried in at least one of: a registration request message, a registration update message, a session establishment request message, or a session modification request message.

37. The terminal device of any one of claims 30 to 36, wherein the first communication unit is configured to send first indication information, wherein the first indication information indicates at least one of: the terminal device supporting reporting the first identifier, the terminal device being capable of identifying the first identifier, or the terminal device being capable of processing the first identifier.

38. The terminal device of any one of claims 30 to 37, wherein the first communication unit is configured to receive second indication information, wherein the second indication information indicates at least one of: a network side supporting processing the first identifier, the network side being capable of identifying the first identifier, the network side requesting the terminal device to report the first identifier, the network side requiring the terminal device to report the first identifier, or the network side allowing the terminal device to report the first identifier.

39. The terminal device of claim 37, wherein the first indication information is carried in a registration request message.

40. The terminal device of claim 38, wherein the second indication information is carried in a registration accept message.

41. A first network device comprising:
a second communication unit configured to receive a first identifier, wherein the first identifier indicates information related to a terminal device, the information related to the terminal device comprises at least one of: information of a user using the terminal device, information of an application running on the terminal device, or information of a service running on the terminal device, and the first identifier is used for determining configuration information associated with the first identifier.

42. The first network device of claim 41, wherein the information of the user using the terminal device comprises at least one of: an identifier of the user using the terminal device, or biometric information of the user using the terminal device.

43. The first network device of claim 41 or 42, wherein the configuration information associated with the first identifier comprises at least one of: a user equipment (UE) policy associated with the first identifier, subscription information associated with the first identifier, a policy rule associated with the first identifier, or other terminals associated with the first identifier.

44. The first network device of any one of claims 41 to 43, further comprising:
a second processing unit configured to perform at least one of:
determining, based on a second association relationship, subscription information associated with the first identifier, wherein the second association relationship comprises subscription information associated with each of one or more second identifiers;
determining, based on a third association relationship, a policy rule associated with the first identifier, wherein the third association relationship comprises a policy rule associated with each of the one or more second identifiers; or
determining, based on a first association relationship, a UE policy associated with the first identifier, wherein the first association relationship comprises a UE policy associated with each of the one or more second identifiers; and/or the second communication unit configured to perform at least one of:
sending the first identifier to a second network device, wherein the first identifier is used by the second network device to determine the UE policy associated with the first identifier;
obtaining the policy rule associated with the first identifier from the second network device;
obtaining the subscription information associated with the first identifier from a third network device; or
obtaining the UE policy associated with the first identifier from the second network device.

45. The first network device of claim 44, wherein the second communication unit is configured to send the first identifier to the second network device, and receive the policy rule associated with the first identifier sent by the second network device.

46. The first network device of claim 44, wherein the second communication unit is configured to send the first identifier to the third network device, and receive the subscription information associated with the first identifier sent by the third network device.

47. The first network device of claim 44, wherein the second communication unit is configured to:
send the first identifier to the third network device, and receive the second association relationship sent by the third network device; or
send the first identifier to the second network device, and receive the third association relationship and/or the first association relationship sent by the second network device.

48. The first network device of any one of claims 41 to 47, wherein the second processing unit is configured to perform at least one of:
determining a quality of service (QoS) rule associated with the first identifier based on subscription information associated with the first identifier and/or a policy rule associated with the first identifier;
determining a QoS parameter associated with the first identifier based on the subscription information associated with the first identifier and/or the policy rule associated with the first identifier; or
determining a packet detection rule (PDR) associated with the first identifier based on the subscription information associated with the first identifier and/or the policy rule associated with the first identifier.

49. The first network device of claim 48, wherein the second communication unit is configured to perform at least one of:
sending the QoS rule associated with the first identifier to the terminal device;
sending the QoS parameter associated with the first identifier to an access network (AN) device, wherein the AN device serves the terminal device; or
sending the PDR associated with the first identifier to a fourth network device.

50. The first network device of any one of claims 44 to 47, wherein the second communication unit is configured to perform at least one of:
sending the UE policy associated with the first identifier to the terminal device; or
sending the first association relationship to the terminal device.

51. The first network device of any one of claims 41 to 50, wherein the first identifier is carried in at least one of: a registration request message, a registration update message, a session establishment request message, or a session modification request message.

52. The first network device of any one of claims 41 to 51, wherein the second communication unit is configured to receive first indication information sent by the terminal device, wherein the first indication information indicates at least one of: the terminal device supporting reporting the first identifier, the terminal device being capable of identifying the first identifier, or the terminal device being capable of processing the first identifier.

53. The first network device of any one of claims 41 to 52, wherein the second communication unit is configured to send second indication information to the terminal device, wherein the second indication information indicates at least one of: a network side supporting processing the first identifier, the network side being capable of identifying the first identifier, the network side requesting the terminal device to report the first identifier, the network side requiring the terminal device to report the first identifier, or the network side allowing the terminal device to report the first identifier.

54. The first network device of claim 52, wherein the first indication information is carried in a registration request message.

55. The first network device of claim 53, wherein the second indication information is carried in a registration accept message.

56. The first network device of claim 49, wherein the fourth network device is a user plane function (UPF).

57. The first network device of any one of claims 44 to 50, wherein the second network device is a policy control function (PCF), and the third network device is a unified data management (UDM).

58. The first network device of any one of claims 41 to 57, wherein the first network device is an access and mobility management function (AMF) or a session management function (SMF).

59. A terminal device, comprising:
a transceiver;
a memory configured to store a computer program; and
a processor configured to invoke and execute the computer program stored in the memory, to cause the terminal device to perform the method of any one of claims 1 to 11.

60. A first network device, comprising:
a transceiver;
a memory configured to store a computer program; and
a processor configured to invoke and execute the computer program stored in the memory, to cause the first network device to perform the method of any one of claims 12 to 29.

61. A chip, comprising:
a processor configured to invoke and execute a computer program stored in a memory, to cause a device equipped with the chip to perform the method of any one of claims 1 to 11 or claims 12 to 29.

62. A computer-readable storage medium configured to store a computer program which, when executed by a device, causes the device to perform the method of any one of claims 1 to 11 or claims 12 to 29.

63. A computer program product comprising computer program instructions that cause a computer to perform the method of any one of claims 1 to 19, claims 1 to 11, or claims 12 to 29.

64. A computer program being operable with a computer to perform the method of any one of claims 1 to 11 or claims 12 to 29.
